# EUROPEAN PATENT APPLICATION

(11) **EP 4 554 036 A1**
(43) Date of publication of application: **14.05.2025**
(21) Application number: 24748244.1
(22) Date of filing: 16.05.2024
(51) Int. Cl.: H02J 3/38, H02J 3/28, H02J 3/32, H02J 3/00, H02J 7/35, F25B 30/00, F25B 49/00

(54) **PHOTOVOLTAIC LINKAGE CONTROL METHOD AND APPARATUS, AND DEVICE AND STORAGE MEDIUM**

(30) Priority: 26.12.2023 CN 202311809926; 22.09.2023 CN 202311240559
(71) Applicant: GUANGDONG PHNIX ECO-ENERGY SOLUTION LTD., Guangzhou, Guangdong 511400 (CN)
(72) Inventor: JIANG, Hao, Guangzhou, Guangdong 511470 (CN); LIU, Zhili, Guangzhou, Guangdong 511470 (CN); LEI, Pengfei, Guangzhou, Guangdong 511470 (CN); ZONG, Yi, Guangzhou, Guangdong 511470 (CN); LIANG, Zonghuo, Guangzhou, Guangdong 511470 (CN)
(74) Representative: Monteiro Alves, Inês
(86) International application number: PCT/CN2024/093742
(87) International publication number: WO 2025/060460

(57) **Abstract**

The present application relates to the field of photovoltaic power generation technology, and discloses a photovoltaic coordination control method, apparatus, device and storage medium. In the method, whether a photovoltaic power supply meets a condition for entering a photovoltaic power curtailment and energy storage mode is detected, a battery level of a battery in the photovoltaic power supply and water temperature and an operating mode of the heat pump unit are determined in response to that the photovoltaic power supply meets the condition, where the operating mode includes a constant temperature shutdown mode and a non-constant temperature shutdown mode, a corresponding coordination control strategy is determined based on the battery level, the water temperature and the operating mode, and the heat pump unit is controlled to perform energy storage and conversion on redundant power generated by curtailing photovoltaic power based on the coordination control strategy. Therefore, it is able to realize the conversion of excess electrical energy generated by the photovoltaic power supply, i.e., converting the excess electrical energy into cold energy and thermal energy, so as to address the balance control issue when the heat pump unit consumes generated power.

## Description

### CROSS-REFERENCE TO RELATED APPLICATIONS

The present application claims priority to Chinese Patent Application No. 2023118099260 filed on December 26, 2023, entitled "PHOTOVOLTAIC COORDINATION CONTROL METHOD, APPARATUS, DEVICE AND STORAGE MEDIUM", which is incorporated by reference herein in its entirety. The present application claims priority to Chinese Patent Application No. 2023112405597 filed on September 22, 2023, entitled "MULTI-MODE HEAT PUMP OPERATION METHOD, APPARATUS, DEVICE AND STORAGE MEDIUM", which is incorporated by reference herein in its entirety.

### TECHNICAL FIELD

The present application relates to the field of photovoltaic power generation technology, in particular to a photovoltaic coordination control method, apparatus, device and storage medium.

### BACKGROUND

Solar photovoltaic power generation is an environmentally friendly and sustainable power-generation technology that plays a significant role in enhancing the longevity and safety of power generation. Currently, photovoltaic inverters are used to convert solar energy into electrical energy and integrate it into an electric grid. However, due to the random variations in sunlight and temperature affecting the electrical energy converted by the photovoltaic inverters, photovoltaic output exhibits randomness and volatility, resulting in instability in the electrical energy fed into the electric grid.

To eliminate the impact of such instability on the electric grid, a practical system needs to limit the photovoltaic output (which is also referred to as curtailment of photovoltaic power). However, curtailing photovoltaic power is a wasteful control manner for the photovoltaic power generation. To address this issue, a current manner involves controlling heat pumps to consume the electrical energy of the photovoltaic power generation that cannot be fed into the electric grid. Nonetheless, this control manner necessitates purchasing electricity from the electric grid. As of now, there is no optimal balanced control scheme for this situation, resulting in a higher reliance on purchasing electricity from the electric grid.

### SUMMARY

A main objective of the present application is to address the issue in the prior art where, under a photovoltaic power generation curtailment scenario, it is not possible to achieve a balance between obtaining power from the electric grid and obtaining power from the photovoltaic power when using a heat pump to consume the power that cannot be fed into the electric grid.

In a first aspect, the present application provides a photovoltaic coordination control method, applied to a heat pump system, where the heat pump system includes a power supply sub-system and a heat pump unit, the power supply sub-system includes a grid power supply and a photovoltaic power supply; and the method includes:
detecting whether the photovoltaic power supply in the power supply sub-system meets a condition for entering a photovoltaic power curtailment and energy storage mode;
determining a battery level of a battery in the photovoltaic power supply and water temperature and an operating mode of the heat pump unit in response to that the photovoltaic power supply meets the condition for entering the photovoltaic power curtailment and energy storage mode, where the operating mode includes a constant temperature shutdown mode and a non-constant temperature shutdown mode;
determining a corresponding coordination control strategy based on the battery level, the water temperature and the operating mode, and controlling the heat pump unit to perform energy storage and conversion on redundant power generated by curtailing photovoltaic power based on the coordination control strategy.

In a second aspect, the present application provides a photovoltaic coordination control apparatus, applied to a heat pump system, where the heat pump system includes a power supply sub-system and a heat pump unit, the power supply sub-system includes grid power supply and photovoltaic power supply; and the apparatus includes:
a detecting module, configured to detect whether the photovoltaic power supply in the power supply sub-system meets a condition for entering a photovoltaic power curtailment and energy storage mode;
a determining module, configured to determine a battery level of a battery in the photovoltaic power supply and water temperature and an operating mode of the heat pump unit in response to that the photovoltaic power supply meets the condition for entering the photovoltaic power curtailment and energy storage mode, where the operating mode includes a constant temperature shutdown mode and a non-constant temperature shutdown mode;
a conversion module, configured to determine a corresponding coordination control strategy based on the battery level, the water temperature and the operating mode, and control the heat pump unit to perform energy storage and conversion on redundant power generated by curtailing photovoltaic power based on the coordination control strategy.

In a third aspect, the present application provides an electronic device, including a memory and at least one processor, where the memory stores instructions, the memory and the at least one processor are connected via a circuit, the at least one processor calls the instructions stored in the memory to cause the electronic device to perform the following steps:
detecting whether a photovoltaic power supply in a power supply sub-system of a heat pump system meets a condition for entering a photovoltaic power curtailment and energy storage mode;
determining a battery level of a battery in the photovoltaic power supply of the heat pump system and water temperature and an operating mode of a heat pump unit of the heat pump system in response to that the photovoltaic power supply meets the condition for entering the photovoltaic power curtailment and energy storage mode, where the operating mode includes a constant temperature shutdown mode and a non-constant temperature shutdown mode;
determining a corresponding coordination control strategy based on the battery level, the water temperature and the operating mode, and controlling the heat pump unit to perform energy storage and conversion on redundant power generated by curtailing photovoltaic power based on the coordination control strategy.

In a fourth aspect, the present application provides a computer-readable storage medium the computer-readable storage medium stores instructions that, when executed on a computer, cause the computer to perform the following steps:
detecting whether a photovoltaic power supply in a power supply sub-system of a heat pump system meets a condition for entering a photovoltaic power curtailment and energy storage mode;
determining a battery level of a battery in the photovoltaic power supply of the heat pump system and water temperature and an operating mode of a heat pump unit of the heat pump system in response to that the photovoltaic power supply meets the condition for entering the photovoltaic power curtailment and energy storage mode, where the operating mode includes a constant temperature shutdown mode and a non-constant temperature shutdown mode;
determining a corresponding coordination control strategy based on the battery level, the water temperature and the operating mode, and controlling the heat pump unit to perform energy storage and conversion on redundant power generated by curtailing photovoltaic power based on the coordination control strategy.

In the technical solution of the present application, whether the photovoltaic power supply in the power supply sub-system meets a condition for entering a photovoltaic power curtailment and energy storage mode is detected, when the condition is met, the heat pump unit is started by using the curtailed photovoltaic power, the battery level of the photovoltaic power supply is detected, and whether the water temperature in the heat pump unit reaches the target temperature is determined. Next, a corresponding coordination control strategy is determined based on the battery level, the water temperature and the operating mode, and the heat pump unit is controlled to perform energy storage and conversion on redundant power generated by curtailing photovoltaic power based on the coordination control strategy. In the present application, whether the photovoltaic power supply meets a condition for entering a photovoltaic power curtailment and energy storage mode is detected, when the condition is met, the heat pump unit is started by using grid power for a preset time period. Next, the heat pump unit continues to operate by using the photovoltaic power, while converting the curtailed photovoltaic power into battery energy. Therefore, it is able to realize the conversion of excess electrical energy generated by the photovoltaic power supply, i.e., converting the excess electrical energy into cold energy and thermal energy, so as to address the balance control issue when the heat pump unit consumes generated power.

### BRIEF DESCRIPTION OF THE DRAWINGS

Fig. 1 is a schematic diagram of a first embodiment of a photovoltaic coordination control method according to the embodiments of the present application;
Fig. 2 is a schematic diagram of a second embodiment of the photovoltaic coordination control method according to the embodiments of the present application;
Fig. 3 is a schematic diagram of a third embodiment of the photovoltaic coordination control method according to the embodiments of the present application;
Fig. 4 is a schematic diagram of a fourth embodiment of the photovoltaic coordination control method according to the embodiments of the present application;
Fig. 5 is a schematic diagram of a fifth embodiment of the photovoltaic coordination control method according to the embodiments of the present application;
Fig. 6 is a schematic diagram of a photovoltaic coordination control apparatus according to an embodiment of the present application;
Fig. 7 is a schematic diagram of the photovoltaic coordination control apparatus according to another embodiment of the present application;
Fig. 8 is a schematic diagram of an electronic device according to the embodiments of the present application.

### DETAILED DESCRIPTION

In order to address the above issues, the present application provides a photovoltaic coordination control method, apparatus, device and storage medium.

Terms such as "first", "second", "third" and "fourth" in the description and claims of the present disclosure are used to differentiate similar objects, and not necessarily used to describe a specific sequence or order. It should be appreciated that the data used in this way may be interchanged under an appropriate circumstance, so that the embodiments of the present application described herein may be implemented in a sequence other than those illustrated or described herein. Moreover, terms "include", "have" and any other variation thereof are intended to encompass non-exclusive inclusion, such that a process, method, system, product or device including a series of steps or units includes not only those steps or elements, but also other steps or units not explicitly listed, or steps or units inherent in the process, method, system, product or device.

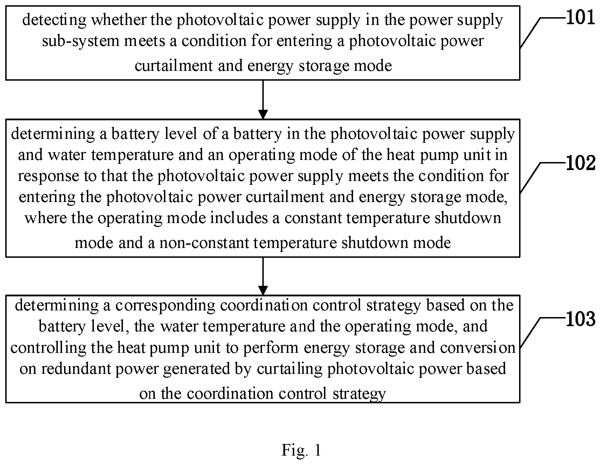

For ease of understanding, the following describes specific processes of the embodiments of the present application. Please refer to Fig. 1, which is a schematic diagram of a first embodiment of the photovoltaic coordination control method according to the embodiments of the present application, the method is applied to a heat pump system, the heat pump system includes a power supply sub-system and a heat pump unit, the power supply system includes a grid power supply and a solar power supply, and the method includes following steps.

Step 101, detecting whether the photovoltaic power supply in the power supply sub-system meets a condition for entering a photovoltaic power curtailment and energy storage mode.

In one embodiment of the present application, it is detected whether there is curtailed power in the photovoltaic power supply. When there is curtailed power in the photovoltaic power supply, a total power consumed by the heat pump unit from the grid power supply is calculated, and it is determined whether the total power is greater than a preset total power consumption, where the preset total power consumption is a maximum power that the heat pump unit is allowed to purchase from the grid power. In response to that the total power is not greater than the preset total power consumption, it is determined that the photovoltaic power supply in the power supply sub-system meets the condition for entering the photovoltaic power curtailment and energy storage mode

In another embodiment of the present application, prior to detecting whether the photovoltaic power supply in the power supply sub-system meets the condition for entering the photovoltaic power curtailment and energy storage mode, the method further includes:
determining whether the power supply sub-system meets a pre-determining stage condition for entering the photovoltaic power curtailment and energy storage mode; wherein the pre-determining stage condition includes:
detecting whether the quantity of times the photovoltaic power supply in the power supply sub-system enters the photovoltaic power curtailment and energy storage mode is greater than 0, or whether a time period from the photovoltaic power supply exits the photovoltaic power curtailment and energy storage mode reaches preset first duration;
determining whether an operating time of the photovoltaic power supply system is within a preset time period in response to that the quantity of times the photovoltaic power supply enters the photovoltaic power curtailment and energy storage mode is greater than 0 or the time period from the photovoltaic power supply exits the photovoltaic power curtailment and energy storage mode reaches the preset first duration, where the preset time period is a predefined activation time range for the photovoltaic power curtailment and energy storage mode;
identifying whether duration of a photovoltaic power curtailment indication sent by the photovoltaic power supply and received by the heat pump unit exceeds preset second duration in response to that the operating time of the photovoltaic power supply system is within the preset time period;
determining whether a first accumulated power consumption of the photovoltaic power curtailment is less than the preset total accumulated power consumption in response to that the duration of the photovoltaic power curtailment indication exceeds the preset second duration, where preset total accumulated power consumption is N times the power required to start the heat pump unit, where N is an integer greater than 1, and the first accumulated power consumption is a total power consumed by the heat pump unit during a process of detecting that the photovoltaic power supply in the power supply sub-system meets the pre-determining stage condition.

Further, after determining that the pre-determining stage condition is met, and the heat pump unit is in a constant temperature shutdown mode, a target shutdown temperature is adjusted. Specifically, multiple parameter temperatures are added on the basis of an original target temperature for the constant temperature shutdown.

In specific, when all the above detected conditions are met, it is determined that the photovoltaic power supply meets the condition for entering the photovoltaic power curtailment and energy storage mode. For example, all the following conditions are met.
1) The photovoltaic power supply has never entered the curtailment and energy storage mode, or it has exited the photovoltaic power curtailment and energy storage mode for more than 20 minutes (i.e., the first duration).
2) The system time is within the preset time period, where the preset time period may be from 10:00 to 16:00 every day.
3) The heat pump has received the photovoltaic power curtailment indication from an inverter for more than 5 minutes (i.e., the second duration).
4) The accumulated power consumption during the curtailment pre-determining stage within the same day (00:00~23:59) is less than 1 kW·h (the minimum allowed power consumption after the heat pump unit starts), where 1 kW·h is a preset empirical value.

Step 102, determining a battery level of a battery in the photovoltaic power supply and water temperature and an operating mode of the heat pump unit in response to that the photovoltaic power supply meets the condition for entering the photovoltaic power curtailment and energy storage mode, where the operating mode includes a constant temperature shutdown mode and a non-constant temperature shutdown mode.

The battery level of the battery in the photovoltaic power supply is collected in real-time using a sensor. The battery level is divided into two intervals: a medium-to-low interval, such as SOB=[40%, 70%) or below 40%, and a high interval, such as SOB=[70%, 100%]. The target water temperature interval includes three intervals, i.e., a medium water temperature interval, a low water temperature interval and an extremely low water temperature interval. The coordination control strategy is determined by matching specific intervals of the battery level and the water temperature.

Step 103, determining a corresponding coordination control strategy based on the battery level, the water temperature and the operating mode, and controlling the heat pump unit to perform energy storage and conversion on redundant power generated by curtailing photovoltaic power based on the coordination control strategy.

In addition, determining the corresponding coordination control strategy based on the battery level, the water temperature and the operating mode, and controlling the heat pump unit to perform energy storage and conversion on the redundant power generated by curtailing photovoltaic power based on the coordination control strategy includes:
determining target temperature of the heat pump unit based on the operating mode, and starting the heat pump unit by using curtailed photovoltaic power; where the target temperature in the constant temperature shutdown mode comprises multiple parameter temperatures added on the basis of a target temperature for the constant temperature shutdown, and the target temperature in the non-constant temperature shutdown mode is the target temperature for the constant temperature shutdown;
determining whether the water temperature reaches the target temperature;
in response to that the water temperature does not reach the target temperature, calculating a difference value between the water temperature and the target temperature, and determining a battery's state of charge based on the battery level;
determining the corresponding coordination control strategy based on the difference value and the battery's state of charge according to a battery-first rule;
controlling, based on the coordination control strategy, the heat pump unit to convert the redundant power generated by curtailing photovoltaic power into cold energy or thermal energy.

That is, it is determined whether there is redundant feed-into-grid power in the photovoltaic power supply, where the redundant feed-into-grid power is a difference between the excess power after a storage in the photovoltaic power supply is full and the power required to start the heat pump unit.

In a case where there is redundant feed-into-grid power in the photovoltaic power supply, after heat pump unit is started for a preset time period, the operation of the heat pump unit is maintained based on the redundant feed-into-grid power, and the power supply system is controlled to enter the photovoltaic power curtailment and energy storage mode, so as to convert the redundant feed-into-grid power into cold energy and thermal energy through the heat pump unit.

To be specific, subsequent to starting the heat pump unit by using curtailed photovoltaic power, the method further includes:
calculating grid-purchased power of the heat pump unit within a preset time period following the startup of the heat pump unit;
controlling the power supply sub-system to enter the photovoltaic power curtailment and energy storage mode after the heat pump unit consumes the minimum allowed power after startup in a case where the grid-purchased power is less than a minimum allowed power consumed by the heat pump unit after startup;
controlling the power supply sub-system to exit the photovoltaic power curtailment and energy storage mode in a case where the grid-purchased power is not less than the minimum allowed power consumed by the heat pump unit after startup.

In the embodiments of the present application, using grid power to start the heat pump unit refers to a single short-term start-up, which is used to consume or convert the excess power generated by the photovoltaic power supply due to the photovoltaic power curtailment.

During the startup process, the real-time water temperature in the heat pump unit is detected and the intervals where the battery level and the real-time water temperature are located respectively are detected, the corresponding coordination control strategy is determined based on the intervals.

In the embodiments of the present application, for the startup control of the heat pump unit, it is generally configured to allow the heat pump unit to start N times within one period (e.g., one day), and each startup consumes a certain amount of power. Therefore, when it is detected that the condition for entering the photovoltaic power curtailment and energy storage mode is met, i.e., excess power is generated by the photovoltaic power supply or power that cannot be fed into the grid, the heat pump unit is started. During this startup time period, it is determined whether the excess power is greater than the power required to start the heat pump unit, i.e., whether there is redundant feed-into-grid power.

In this embodiment, after the heat pump unit is started for the preset time period, calculate an accumulated power consumption of the heat pump unit within the preset time.

In a case where the grid-purchased power is less than the minimum allowed power consumed by the heat pump unit after startup, the power supply sub-system is controlled to enter the photovoltaic power curtailment and energy storage mode after the heat pump unit consumes the minimum allowed power after startup, so as to convert the excess power generated in real time by the photovoltaic power supply into the cold energy and thermal energy.

In a case where the grid-purchased power is greater than the minimum allowed power consumed by the heat pump unit after startup, after the heat pump unit consumes the minimum allowed power after startup, power is extracted from the battery of the photovoltaic power supply to maintain the working and standby modes of the heat pump unit, so as to convert the power in the battery of the photovoltaic power supply into the cold energy and thermal energy.

In practical applications, when starting the heat pump unit, it needs to send a "battery power usage disallowed" instruction to the heat pump unit, so that the grid power is only used to start the heat pump unit. Next, the heat pump unit determines, according to a current mode of the heat pump unit, multiple target energy-storage temperatures, such as a target cooling energy-storage temperature, a target heating energy-storage temperature, a target hot-water energy-storage temperature. For example, the target cooling energy-storage temperature is less than a target cooling standard temperature, the target heating energy-storage temperature is greater than a target heating standard temperature.

Furthermore, after the heat pump unit starts, the power consumption for this start-up stage of the heat pump unit is calculated separately, and the total power consumption of the day is accumulated. During the time period when the power consumption of the heat pump unit at this start-up stage reaches 0.1kW·h (i.e., preset total consumed power), the grid-purchased power is continuously determined.

Specifically, during a process of continuously determining the grid-purchase power, in a case where the grid-purchased power is less than 100W (which is the preset total consumed power) during this time period, after the power consumption of the heat pump unit reaches 0.1kW·h, the photovoltaic power curtailment and energy storage mode is entered.

In a case where the grid-purchased power is greater than 100W (which is the preset total consumed power) during this time period, after the power consumption of the heat pump unit reaches 0.1kW·h, it exits the pre-determining stage, return to the constant temperature shutdown (standby) mode, send a "battery power usage allowed" instruction to the heat pump unit, and executes the target standard temperature determination.

In the embodiments of the present application, when heat pump unit in the photovoltaic power curtailment and energy storage mode, the method further includes:
determining, by the heat pump unit, constant start-up/shut-down control based on the target energy-storage temperature;
calculating the total power consumption of the heat pump unit during the photovoltaic power curtailment and energy storage mode; and/or,
calculating a total heating output and a total cooling output of the heat pump unit during the photovoltaic power curtailment and energy storage mode.

Furthermore, after entering the photovoltaic power curtailment and energy storage mode, if any of the following conditions are met, the photovoltaic power supply immediately exits the photovoltaic power curtailment and energy storage mode, a "battery power usage allowed" instruction is sent to the inverter, and the standard target temperature determination is performed, such as:
1) The photovoltaic power curtailment indication changes to 0 and it maintains for duration of 2 minutes (communicating once per minute, effectively twice in total);
2) The system time is not within the preset time period, where the preset time period is from 10:00 to 16:00 every day.

In another embodiment of the present application, determining the corresponding coordination control strategy based on the difference value and the battery's state of charge according to the battery-first rule includes:
matching the difference value with preset water temperature ranges to determine a target water temperature range that the difference value is in, wherein the target water temperature range includes a medium water temperature range, a low water temperature range and an extremely low water temperature range;
determining that the corresponding coordination control strategy is to limit a frequency of the heat pump unit and prevent the frequency of the heat pump unit from increasing in a case where the target water temperature range is the medium water temperature range or the low water temperature range and the state of charge indicates a low state of charge;
determining that the corresponding coordination control strategy is to control the frequency of the heat pump unit to steadily increase in a case where the target water temperature range is the medium water temperature range or the low water temperature range and the state of charge indicates a non-low state of charge.

In practical applications, there are two schemes for the photovoltaic power curtailment and energy storage: non-constant temperature shutdown and constant temperature shutdown. For the non-constant temperature shutdown, if the water temperature of the heat pump unit does not reach the target temperature, the operating frequency of the heat pump unit is adjusted to prioritize charging the battery, thereby achieving the control of the non-constant temperature shutdown. For constant temperature control, when the water temperature reaches the target temperature, the target temperature is increased by one level and the heat pump unit is started to convert and store the energy generated by curtailing photovoltaic power.

For example,
(1) medium water temperature, current water temperature = [target temperature - constant temperature start-up hysteresis, target temperature);
(2) low water temperature, current water temperature = [target temperature - constant temperature start-up hysteresis - low water temperature hysteresis, target temperature - constant temperature start-up hysteresis);
(3) extremely low water temperature, current water temperature < target temperature - constant temperature start-up hysteresis - low water temperature hysteresis;
A: a medium battery level, SOB=[40%, 70%);
B: a high battery level, SOB=[70%,100%];
I: presence of the curtailed photovoltaic power.

For the combination of the above conditions, when detecting that the water temperature is (3), the photovoltaic power curtailment indication is I, and the battery level is A or B, the normal coordination control strategy is used to prioritize charging the battery. When detecting that the water temperature is (1) or (2), the photovoltaic power curtailment indication is I, and the battery level is A, the coordination control strategy is to limit the frequency of the heat pump unit, not allowing the frequency to increase. When detecting that the water temperature is (1) or (2), the photovoltaic power curtailment indication is I, and the battery level is B, the coordination control strategy is to allow the frequency to be freely adjusted through proportional-integral-differential (PID) according to the water temperature, with an increasing rate of 6Hz/min (parameter B).

In the embodiments of the present application, subsequent to controlling the heat pump unit to perform energy storage and conversion on the redundant power generated by curtailing photovoltaic power based on the coordination control strategy, the method further includes:

when the power supply sub-system exits the photovoltaic power curtailment and energy storage mode and it is determined that the heat pump unit continues to be powered by using the photovoltaic power supply, obtaining the output power of the photovoltaic power supply, and calculating the operating frequency of the heat pump unit based on the output power; controlling the heat pump unit to take power from the battery based on the operating frequency.

Specifically, through setting a data acquisition device in the photovoltaic power supply to obtain the output power, the data acquisition device may be an ammeter or a voltmeter, the current, voltage or output power generated by the photovoltaic power system is calculated through detecting the current or voltage passing through the data acquisition device, as well as the current, voltage or power supplied by the photovoltaic power system to the heat pump unit.

Furthermore, the current or voltage passing through the data acquisition device is specifically detected as follows. When it is monitored that the data acquisition device is triggered, a voltage change of the data acquisition device is collected, so as to obtain the current value or voltage value generated by the photovoltaic power system.

Furthermore, that the output power generated by the photovoltaic power system is calculated based on the current or voltage passing through and measured by the data acquisition device is specifically done as follows.

When the data acquisition device is an ammeter, real-time current values are obtained during a time period T. An average current detected by the data acquisition device during the time period T is obtained based on the current values and the time period. An impedance R of the data acquisition device is obtained, the output power of the photovoltaic power supply is calculated through *P = I * I * R*, where *P* is the power, *I* is the obtained average current, and *R* is the impedance of the data acquisition device.

When the data acquisition device is a voltmeter, real-time voltage values are obtained during a time period T. An average voltage detected by the data acquisition device during the time period T is obtained based on the voltage values and the time period. An impedance R of the data acquisition device is obtained, the output power of the photovoltaic power supply is calculated through *P = U * U* / *R,* where *P* is the power, *U* is the obtained average voltage, and *R* is the impedance of the data acquisition device.

In specific, the heat pump unit is started and controlled to use photovoltaic (PV) power through the operating frequency, and after the start-up of the heat pump unit, real-time power generation from the battery in the photovoltaic power supply is obtained in real time, the operation of the heat pump unit is dynamically adjusted based on the real-time power generation, so as to consume the energy from the battery, thereby avoiding over-discharge of the battery and ensuring appropriate power usage.

In the embodiments of the present application, after controlling the power supply sub-system to enter the photovoltaic power curtailment and energy storage mode and converting the redundant feed-into-grid power into the cold energy or thermal energy through the heat pump unit, the method further includes:
calculating the total power consumed by the heat pump unit and the total power stored after conversion into the cold energy or thermal energy;
calculating the cost of the total power consumed by the heat pump unit and the total power stored after conversion based on a utility electricity rate corresponding to a current time;
displaying the total power consumed by the heat pump unit, the total power stored after conversion and the corresponding cost.

Specifically, a total reutilization amount of the curtailed photovoltaic power is calculated as A kW·h, and a total energy consumption of the heat pump during the photovoltaic power curtailment and energy storage period is calculated. A total converted energy reutilized from the curtailed photovoltaic power is calculated as B kW·h, including a total cooling capacity and a total heating capacity during the period where heat pump use the curtailed photovoltaic power to realize the energy storage. An electricity rate is predicted, where a floating electricity rate needs to be estimated using an algorithm and a fixed electricity rate may be preset. A total energy consumption under the photovoltaic power curtailment pre-judgment scheme is calculated.

During the use of the photovoltaic system, through the waste electricity recovery scheme, a total of A kW·h of photovoltaic curtailed energy has been converted into B kW·h of high-grade cooling energy and heating energy, X yuan in operating costs is expected to be saved.

Furthermore, the aforementioned calculated data may be processed through the cloud and an application APP, to generate statistical reports presented on a yearly, monthly, and daily basis.

In practical applications, the electricity rate may be predicted specifically based on the current time and the changing pattern of historical electricity rates. A specific electricity rate at N hours after the current time may be predicted, and whether the specific electricity rate meets the requirements for taking power from the grid power is determined. In a case where the specific electricity rate meets the requirements, power is taken from the grid power to charge the battery. Additionally, the heat pump unit may be controlled to operate by using the power taken from the grid power in conjunction with stored energy in the battery.

Preferably, an electricity rate for the next hour is predicted, and whether the remaining battery capacity meets the requirements for recharging is determined. In a case where the remaining battery capacity meets the requirements for recharging, power is taken from the grid power to charge the battery during the lowest-priced time period within the next hour.

Furthermore, before predicting the electricity rate, whether there is remaining photovoltaic power in the photovoltaic power generation system is determined. In a case where there is not remaining photovoltaic power, the electricity rate is predicted. In a case where there is remaining photovoltaic power, it does not need to predict the electricity rate. Additionally, after predicting the electricity rate for the next N hours, time periods where the electricity rate is below the preset electricity rate threshold in the requirements for taking power from the grid power are identified. When it requires to recharge the battery, power is taken from the grid power during a corresponding time period to charge the battery.

In the embodiments of the present application, whether the photovoltaic power supply in the power supply sub-system meets a condition for entering a photovoltaic power curtailment and energy storage mode is detected. When the condition is met, the heat pump unit is started by using the curtailed photovoltaic power, and whether there is redundant feed-into-grid power in the photovoltaic power supply is determined, where the redundant feed-into-grid power is a difference between the excess power after a storage in the photovoltaic power supply is full and the power required to start the heat pump unit. In a case where there is redundant feed-into-grid power in the photovoltaic power supply, after the heat pump unit is started for a preset time period, the operation of the heat pump unit is maintained based on the redundant feed-into-grid power, and the power supply system is controlled to enter the photovoltaic power curtailment and energy storage mode, so as to convert the redundant feed-into-grid power into cold energy and thermal energy through the heat pump unit. When the power supply sub-system exits the photovoltaic power curtailment and energy storage mode and it is determined that the heat pump unit continues to be powered by using the photovoltaic power supply, the output power of the photovoltaic power supply is obtained, and the operating frequency of the heat pump unit is calculated based on the output power. Next, the heat pump unit is controlled to take power from the battery based on the operating frequency. Therefore, it is able to address the issue in the prior art where, under a photovoltaic power generation curtailment scenario, it is not possible to achieve a balance between obtaining power from the electric grid and obtaining power from the photovoltaic power when using a heat pump to consume the power that cannot be fed into the electric grid.

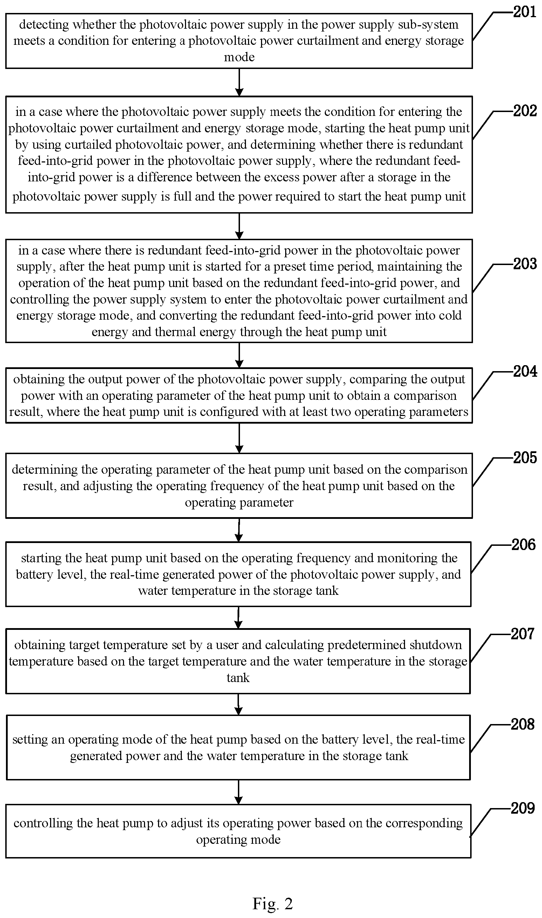

Please refer to Fig. 2, which shows a second embodiment of the photovoltaic coordination control method according to the embodiments of the present application, the method including following steps.

Step 201, detecting whether the photovoltaic power supply in the power supply sub-system meets a condition for entering a photovoltaic power curtailment and energy storage mode.

Step 202, in a case where the photovoltaic power supply meets the condition for entering the photovoltaic power curtailment and energy storage mode, starting the heat pump unit by using curtailed photovoltaic power, and determining whether there is redundant feed-into-grid power in the photovoltaic power supply, where the redundant feed-into-grid power is a difference between the excess power after a storage in the photovoltaic power supply is full and the power required to start the heat pump unit.

Starting the heat pump unit by using curtailed photovoltaic power includes: determining whether the heat pump unit is in a constant temperature shutdown mode; in a case where the heat pump unit is in the constant temperature shutdown mode, adding multiple parameter temperatures on the basis of a target temperature for the constant temperature shutdown, and starting the heat pump unit by using the curtailed photovoltaic power in the photovoltaic power supply; in a case where the heat pump unit is not in the constant temperature shutdown mode, starting the heat pump unit by using the curtailed photovoltaic power in the photovoltaic power supply, where the multiple parameter temperatures may include a room temperature and buffer water temperature and humidity for cooling and heating, the humidity of the hot water tank in the hot water mode, etc.

Step 203, in a case where there is redundant feed-into-grid power in the photovoltaic power supply, after the heat pump unit is started for a preset time period, maintaining the operation of the heat pump unit based on the redundant feed-into-grid power, and controlling the power supply system to enter the photovoltaic power curtailment and energy storage mode, and converting the redundant feed-into-grid power into cold energy and thermal energy through the heat pump unit.

Step 204, obtaining the output power of the photovoltaic power supply, comparing the output power with an operating parameter of the heat pump unit to obtain a comparison result, where the heat pump unit is configured with at least two operating parameters.

The operating parameters include parameters in a first operating mode and at least one second operating mode, the first operating mode is when the heat pump unit is stopped, and the second operating mode is when the heat pump unit operates at a specific proportion of a working frequency.

In specific, a first rated power of the heat pump unit is determined based on the first operating mode, at least one second rated power of the heat pump unit is determined based on at least one second operating mode, where the first rated power is less than the second rated power, and the output power is compared with the first rated power and at least one second rated power to obtain comparison results.

In the embodiments of the present application, the operating parameter of the heat pump unit is obtained, the operating parameter may be the pre-set current, voltage or power of the heat pump unit. The operating parameter is categorized into two types, one of which is a value that is insufficient to drive the heat pump unit, and the other one of which is a value that is capable of driving the heat pump unit.

When comparing the output power, current, or voltage with the operating parameter of the heat pump unit, it determines whether the power, current, or voltage currently generated by the photovoltaic system is capable of driving the heat pump unit, determines the specific power, current, or voltage that is capable of enabling the heat pump unit to operate from the power, current, or voltage currently generated by the photovoltaic system, and uses the result of whether it is capable of driving the heat pump unit and the specific current, voltage, and output power as the comparison results, where the specific current, voltage, and power are the output power, current, or voltage minus power, current, or voltage loss during transmission.

Step 205, determining the operating parameter of the heat pump unit based on the comparison result, and adjusting the operating frequency of the heat pump unit based on the operating parameter.

In this step, when the comparison result indicates that the output frequency, voltage, or current cannot drive the heat pump unit, the operating frequency of the heat pump unit is 0 Hz, i.e., the heat pump unit and the heat pump in the heat pump unit do not operate. When the comparison result indicates that the output frequency, voltage, or current can drive the heat pump unit, the heat pump unit operates at the maximum frequency based on the output frequency, voltage or current.

When adjusting the operating frequency of the heat pump unit based on the operating parameters, it obtains the operating parameter corresponding to the current operating frequency of the heat pump unit, and determines whether it is the same as the currently determined operating parameter. When they are the same, the heat pump unit continues to operate at the current frequency. When they are different, the maximum frequency at which the heat pump unit can operate is calculated based on the output frequency, voltage or current, and the heat pump unit operates at this frequency.

Furthermore, since the photovoltaic power generation is unstable, in order to reduce frequency fluctuations of the unit across different platforms, it is stipulated that each frequency is continuously operated for a fixed time period before switching platforms.

In the embodiments of the present application, when the at least one second operating mode is one second operating mode, and the comparison result indicates that the output power is not greater than the first rated power, it is determined that the heat pump unit operates in the first operating mode, the heat pump unit is adjusted based on the operating parameter of the first operating mode to operate at a first operating frequency, and the heat pump in the heat pump unit is stopped, i.e., both the heat pump unit and the heat pump in the heat pump unit do not operate.

In a case where the comparison result indicates that the output power is greater than the first rated power, it is determined that the heat pump unit operates in the second operating mode, the heat pump unit is adjusted based on the operating parameter of the second operating mode to operate at a second operating frequency, and the heat pump in the heat pump unit operates, where the second operating frequency is the maximum frequency which the output power that can enable the heat pump unit to run at.

In a case where the comparison result indicates that the output power is greater than the second rated power, it is determined that the operating parameter of the heat pump unit is the parameter in the second operating mode, and the operating frequency of the heat pump unit is adjusted to the maximum operating frequency of the heat pump unit.

In a case where there are two second operating modes, and the comparison result indicates that the output power is not greater than the first rated power, it is determined that the heat pump unit operates in the first operating mode, the heat pump unit is adjusted based on the operating parameter of the first operating mode to operate at the first operating frequency, and the heat pump in the heat pump unit is stopped, i.e., both the heat pump unit and the heat pump in the heat pump unit do not operate.

In a case where there are two second operating modes, determining the operating parameter of the heat pump unit based on the comparison result, and adjusting the operating frequency of the heat pump unit based on the operating parameter includes:
when the comparison result indicates that the output power is not greater than the first rated power, determining that the heat pump unit operates in the first operating mode, and adjusting the heat pump unit based on the operating parameter of the first operating mode to operate at the first operating frequency, and stopping the heat pump in the heat pump unit;
when the comparison result indicates that the output power is greater than the first rated power but less than the second rated power, determining that the heat pump unit operates in the second operating mode, adjusting the heat pump unit based on the operating parameter of the second operating mode to operate at a third operating frequency, and enabling the heat pump in the heat pump unit to operate.
when the comparison result indicates that the output power is not greater than the second rated power, determining that the heat pump unit operates in the second operating mode, adjusting the heat pump unit based on the operating parameter of the second operating mode to operate at a fourth operating frequency, and enabling the heat pump in the heat pump unit to operate.

For example, when I≤I₀₁, the heat pump does not start operating because the photovoltaic power generation is insufficient to drive the heat pump system, avoiding the use of the grid power unnecessarily, which is referred to as a "sleep mode". When I₀₁≤I<I₀₂, the heat pump unit operates at the maximum frequency that I can drive the heat pump unit to operate at, which is referred to as a "low-frequency mode". When I₀₃<I, the heat pump unit is capable of operating at a set maximum frequency, which is referred to as a "high-frequency mode".

Step 206, starting the heat pump unit based on the operating frequency and monitoring the battery level, the real-time generated power of the photovoltaic power supply, and water temperature in the storage tank.

In the embodiments of the present application, when the heat pump unit is started, the heat pump unit first enters the sleep mode. In the sleep mode, all loads are turned off, that is, the heat pump stops working, which is equivalent to be in a constant temperature shutdown state.

Specifically, the constant temperature shutdown state means, when the heat pump unit operates in different operating modes, the water temperature in the storage tank is heated to shutdown temperature, and the heat pump unit is stopped running and automatically enters or returns to the sleep mode. In addition, when the water temperature in the storage tank drops to the target temperature minus the temperature hysteresis, the heat pump unit operates again in the operating mode prior to the sleep mode.

Step 207, obtaining target temperature set by a user and calculating predetermined shutdown temperature based on the target temperature and the water temperature in the storage tank.

In the embodiments of the present application, the target temperature set by the user includes multiple ranges of cold water and hot water. Once set by the user, the target temperature is automatically stored and updated. When the heat pump unit is started in a new period, and the target temperature is not adjusted by the user, the target temperature set by the user in a previous period is used.

In the embodiments of the present application, when the target temperature of the heat pump unit is updated, the heat pump unit immediately exits the sleep mode and, in response to a control instruction for the operating mode from the user, based on the target temperature, switches to a corresponding operating mode to run the heat pump unit and adjust the water temperature in the storage tank.

Step 208, setting an operating mode of the heat pump based on the battery level, the real-time generated power and the water temperature in the storage tank.

In the embodiments of the present application, it requires to obtain the control instructions for different operating modes selected by the user, and the heat pump unit operates based on the operating mode selected by the user and the water temperature in the storage tank. The water temperature in the storage tank is adjusted through applying the operating mode to the heat pump unit.

In specific, the adjustment manner includes thermal storage and cold storage.

Furthermore, after starting the heat pump unit and controlling the heat pump unit to enter the sleep mode, the method further includes obtaining ambient temperature and determining the operating mode of the heat pump unit based on the ambient temperature and the target temperature.

In specific, when the user does not set or update the target temperature, the target temperature from the previous period is applied.

In practical applications, when the ambient temperature is lower than the target temperature, the adjustment manner is thermal storage; when the ambient temperature is higher than the target temperature, the adjustment manner is cold storage.

In another embodiment of the present application, the operating mode further includes a first mode, a second mode, a third mode, a fourth mode and a standard mode; the battery level includes a high battery level, and the generated power includes high generated power; setting the operating mode of the heat pump unit based on the battery level, the generated power and the water temperature in the storage tank includes:
determining whether the battery level is the high battery level and the generated power is the high generated power;
setting the operating mode of the heat pump to the fourth mode in response to the battery level is the high battery level and the generated power is the high generated power;
determining the operating mode of the heat pump based on the battery level, the generated power and the water temperature in the storage tank among the first mode, second mode, third mode and standard mode in response to that the battery level is not the high battery level and/or the generated power is not the high generated power.

Step 209, controlling the heat pump to adjust its operating power based on the corresponding operating mode.

In the embodiments of the present application, it requires to obtain the control instructions for different operating modes selected by the user, and the heat pump unit operates based on the operating mode selected by the user and the target temperature. The operating power is adjusted through applying the corresponding operating mode to the heat pump unit.

In specific, based on different operating modes, a changing condition for the operating frequency of the heat pump during heating and cooling processes is set, allowing the heat pump to flexibly adjust different operating frequencies according to different operating modes, thereby achieving energy-saving effects.

In the embodiments of the present application, the operating mode include the sleep mode, starting the heat pump based on the operating frequency and monitoring the battery level, the real-time generated power of the photovoltaic power supply and the water temperature in the storage tank, the method further includes:
calculating blocking time of the heat pump unit;
determining whether the ambient temperature meets a preset winter protection condition;
starting the heat pump in the heat pump unit and adjusting the water temperature in the storage tank to protection temperature, in response to that the ambient temperature meets the preset winter protection condition;
controlling the photovoltaic power supply to exit the sleep mode when the blocking time reaches a threshold, to reduce one sleep opportunity.

In specific, after starting the heat pump unit, it requires to calculate the blocking time of the heat pump unit based on the startup time.

Specifically, the power sources for the heat pump unit include the photovoltaic power and the grid power. By increasing the blocking time, during which the State of Charge (SOC) of the photovoltaic power is stored and increased, and after reaching the set blocking time or the blocking time reaches a threshold, the heat pump is preferably started by using the photovoltaic power.

In the embodiments of the present application, it is determined whether the ambient temperature meets a preset winter protection condition, in a case where preset winter protection condition is met, in order to prevent the heat pump unit from being damaged due to excessively low ambient temperatures, the blocking time is not calculated. Instead, the heat pump in the heat pump unit is directly started to adjust the water temperature in the storage tank to the protection temperature.

In the embodiments of the present application, each time the heat pump unit is started, one sleep opportunity is allowed. When the heat pump unit enters the sleep mode, one allowed sleep opportunity is used. When the blocking time reaches the threshold, the heat pump unit exits the sleep mode and one sleep opportunity is reduced.

Further, when the water temperature in the storage tank reaches the shutdown temperature, one sleep opportunity may be allowed for the heat pump unit until the sleep opportunities are reduced to 0.

Furthermore, subsequent to controlling the heat pump to adjust the operating power based on the corresponding operating mode, the method further includes:
monitoring the water temperature in the storage tank, and controlling the heat pump to adjust the water temperature in the storage tank based on the shutdown temperature when the water temperature in the storage tank is lower than a difference between the target temperature and the temperature hysteresis;
stopping a temperature adjustment operation when the water temperature in the storage tank reaches the shutdown temperature.

In the embodiments of the present application, the multi-mode heat pump unit is controlled to adjust the water temperature in the storage tank based on the determined shutdown temperature. When the water temperature in the storage tank reaches the shutdown temperature, the heat pump in the multi-mode heat pump unit stops running, one sleep opportunity is added, and it automatically enters the sleep mode, starting the calculation of the blocking time.

In another embodiment of the present application, the operating mode further includes a first mode, a second mode, a third mode, a fourth mode and a standard mode; the battery level includes a high battery level, and the real-time generated power includes high generated power; setting the operating mode of the heat pump unit based on the battery level, the generated power and the water temperature in the storage tank includes:
determining whether the battery level is the high battery level and the real-time generated power is the high generated power;
setting the operating mode of the heat pump to the fourth mode in response to the battery level is the high battery level and the real-time generated power is the high generated power;
determining the operating mode of the heat pump based on the battery level, the real-time generated power and the water temperature in the storage tank among the first mode, the second mode, the third mode and the standard mode in response to that the battery level is not the high battery level and/or the real-time generated power is not the high generated power.

In another embodiment of the present application, determining the operating mode of the heat pump based on the battery level, the real-time generated power and the water temperature in the storage tank among the first mode, the second mode, the third mode and the standard mode includes:
determining whether the water temperature in the storage tank is extremely low water temperature;
setting the operating mode of the heat pump to the standard mode in response to that the water temperature in the storage tank is extremely low;
determining the operating mode of the heat pump among the first mode, the second mode and the third mode based on the battery level, the real-time generated power, and the water temperature in the storage tank in response to that the water temperature in the storage tank is not extremely low.

In another embodiment of the present application, the real-time generated power further includes medium generated power and low generated power, determining the operating mode of the heat pump among the first mode, the second mode and the third mode based on the battery level, the real-time generated power, and the water temperature in the storage tank includes:
determining whether the real-time generated power is the low generated power;
setting the operating mode of the heat pump to the first mode in response to that the real-time generated power is the low generated power;
determining the operating mode of the heat pump between the second mode and the third mode based on the battery level, the generated power and the water temperature in the storage tank in response to that the real-time generated power is not the low generated power.

In another embodiment of the present application, determining the operating mode of the heat pump based on the battery level, the real-time generated power and the water temperature in the storage tank between second mode and the third mode includes:
determining whether the battery level is the high battery level;
setting the operating mode of the heat pump to the third mode in response to the battery level is the high battery level;
setting the operating mode of the heat pump to the second mode when the real-time generated power is the medium generated power, and setting the operating mode of the heat pump to the third mode when the real-time generated power is the high generated power, in response to the battery level is not the high battery level.

In this embodiment, it is determined whether the battery level is the high battery level and the generated power is the high generated power, the operating mode of the multi-mode heat pump is set to the fourth mode in response to that the battery level is the high battery level and the generated power is the high generated power. When it does not meet that the battery level is the high battery level and the generated power is the high generated power, the method proceeds with determining whether the water temperature in the storage tank is extremely low water temperature, the operating mode of the multi-mode heat pump is set to the standard mode in response to that the water temperature in the storage tank is the extremely low water temperature. When it does not meet that the water temperature in the storage tank is the extremely low water temperature, the method proceeds with determining whether the generated power is the low generated power. The operating mode of the multi-mode heat pump is set to the first mode in response to that the generated power is the low generated power. When it does not meet that the generated power is the low generated power, the method proceeds with determining whether the battery level is a high battery level. The operating mode of the multi-mode heat pump is set to the third mode in response to that the battery level is the high battery level. When it does not meet that the battery level is the high battery level, the method proceeds with determining a level of the generated power. When the generated power is the medium generated power, the operating mode of the multi-mode heat pump is set to the second mode. When the generated power is the high generated power, the operating mode of the multi-mode heat pump is set to the third mode. Based on the setting of different operating modes, the multi-mode heat pump is controlled to adjust the water temperature in the storage tank, so as to meet the corresponding operational requirements and goals.

Specifically, the fourth mode is a high photovoltaic operating mode, in a case where the multi-mode heat pump operates in the high photovoltaic operating mode, the operating power of the heat pump is not limited, and only the shutdown temperature of the heat pump is limited. The shutdown temperature of the multi-mode heat pump is adjusted by setting a compensation temperature.

In practical applications, the compensation temperature in the high photovoltaic operating mode is obtained, and the shutdown temperature is set based on the target temperature and the compensation temperature. The multi-mode heat pump is controlled to adjust the water temperature in the storage tank based on the shutdown temperature, and stop working when the water temperature in the storage tank reaches the shutdown temperature.

Specifically, when the adjustment mode of the multi-mode heat pump is thermal storage, the shutdown temperature is the target temperature plus the preset compensation temperature; when the adjustment mode of the multi-mode heat pump is cold storage, the shutdown temperature is the target temperature minus the preset compensation temperature.

Further, the preset compensation temperature should be limited to a positive value.

As can be appreciated, in the high photovoltaic operating mode, since the photovoltaic power is used, the operating power is not limited.

In practical applications, determining may also be made based on the capacity of the photovoltaic power, which is categorized into high-level photovoltaic power, medium-level photovoltaic power, and low-level photovoltaic power. Correspondingly, when starting the multi-mode heat pump, the operating mode of the multi-mode heat pump is controlled based on the detected capacity of the photovoltaic power.

Specifically, the high-level photovoltaic power corresponds to the high photovoltaic operating mode, the medium-level photovoltaic power corresponds to a medium photovoltaic operating mode, and the low-level photovoltaic power corresponds to a low photovoltaic operating mode. This shortens the user's selection time and achieves energy-saving effects by automatically using the photovoltaic power.

Specifically, the third mode is the medium photovoltaic operating mode. The multi-mode heat pump is switched to the medium photovoltaic operating mode, and the shutdown temperature is set based on the target temperature. The multi-mode heat pump operates based on a second power limit. A ratio of the operating power of the heat pump to the second power limit is calculated to obtain a medium photovoltaic power ratio. A change in the medium photovoltaic power ratio is determined. When the medium photovoltaic power ratio is less than a preset first ratio, it stops controlling the operating frequency of the heat pump by using the second power limit. When the medium photovoltaic power ratio is not less than the first ratio, it stops increasing the operating power. When the medium photovoltaic power ratio is not less than a preset second ratio, a reduction in frequency is performed for the operating power and cyclic detection is performed at a preset time intervals until the medium photovoltaic power ratio is less than the second ratio and/or the water storage temperature reaches the shutdown temperature, and then the operation stops.

In the embodiments of the present application, when the user selects the medium photovoltaic operating mode, in response to the control instruction for the medium photovoltaic operating mode selected by the user, the multi-mode heat pump operates in the medium photovoltaic operating mode and the shutdown temperature of the multi-mode heat pump is set based on the target temperature. There is the second power limit corresponding to the medium photovoltaic operating mode, and the operating power of the multi-mode heat pump is limited based on the second power limit.

In the embodiments of the present application, the operating power of the heat pump is collected, and the medium photovoltaic power ratio is calculated based on the collected operating power and the second power limit corresponding to the medium photovoltaic operating mode.

Specifically, by monitoring the operating power and calculating the medium photovoltaic power ratio in real time, where the first ratio and the second ratio are each a customizable preset value. Initially, the first ratio is preset to 0.9, and the second ratio is preset to 1.

In practical application, when the medium photovoltaic power ratio is less than 0.9, the operating power of the heat pump is not limited. When the medium photovoltaic power ratio is not less than 0.9, the operating power of the heat pump is fixed, i.e., stopping increasing the operating power. When the medium photovoltaic power ratio is not less than 1, the frequency of the operating power of the heat pump is reduced, and cyclic detection of the operating power is performed at preset time intervals until the medium photovoltaic power ratio is less than 1 or the water storage temperature reaches the shutdown temperature, and then the operation stops, i.e., the operating power becomes zero.

In practical applications, the second mode is the low photovoltaic operating mode. The multi-mode heat pump is switched to the low photovoltaic operating mode and the shutdown temperature is set based on the target temperature. The multi-mode heat pump operates based on the first power limit. A ratio of the operating power of the heat pump to the first power limit is calculated to obtain a low photovoltaic power ratio. The operating frequency of the heat pump is controlled based on the low photovoltaic power ratio to adjust the water temperature in the storage tank, and the operation stops when the water temperature in the storage tank reaches the shutdown temperature.

In the embodiments of the present application, when the user selects the low photovoltaic operating mode, in response to the control instruction for the low photovoltaic operating mode selected by the user, the multi-mode heat pump operates in the low photovoltaic operating mode and the shutdown temperature of the multi-mode heat pump is set based on the target temperature. There is the first power limit corresponding to the low photovoltaic operating mode, and the operating power of the multi-mode heat pump is limited based on the first power limit.

In the embodiments of the present application, subsequent to controlling the heat pump unit to take power from the battery based on the operating frequency, the method further includes:
detecting the real-time energy storage temperature of the heat pump unit, and when the real-time energy storage temperature meets the preset target temperature for energy supply, controlling the heat pump unit to provide working energy to one or more connected end devices.

Specifically, the real-time energy storage temperature of the heat pump unit is obtained and whether the real-time energy storage temperature meets the preset target temperature for energy supply is determined.

In response to that the preset target temperature for energy supply is met, the maximum thermal energy supply value of the battery at the current time is calculated based on the real-time energy storage temperature and the energy loss during energy supply.

The required energy of each end device is obtained, and based on the required energy of each end device and the thermal energy supply, at least one target device from the end devices is determined.

The heat pump unit is controlled to provide the working energy to the target device.

In practical applications, the real-time energy storage temperature of the heat pump unit may be obtained through the following manner: obtaining the frequency and operating time of the heat pump unit, calculating the work done by the heat pump unit at the frequency based on the frequency and the operating time, calculating the convertible thermal energy from the work done and the energy loss incurred, and obtaining the real-time energy storage temperature of the heat pump unit from the convertible thermal energy, where a formula for calculation is *T = Q*/(*C*M*)*, T* is the temperature, *Q* is the convertible thermal energy from the work done by the heat pump unit, *C* is a specific heat capacity, and *M* is the mass of the medium contained in the heat pump unit.

The energy loss during energy supply is obtained, and a maximum thermal energy supply value of the photovoltaic power at the current time is obtained by subtracting the energy loss from the convertible thermal energy from *Q*, where *Q* represents the work done by the heat pump unit.

The required energy of each end device corresponds to the rated current, rated voltage, or rated power that can drive each end device. When obtaining parameter information of each end device, a value of the rated current, rated voltage, or rated power is obtained.

At least one target device is determined from the end devices based on the required energy of each end device and the thermal energy supply through the following manner: taking the minimization of operating costs as a primary optimization goal, and establishing an energy management model based on historical data of the device. When inputting available energy values, an optimal operation scheme is outputted, i.e., determining specific target devices, thus achieving the scheduling of energy and devices.

In summary, whether the photovoltaic power supply meets a condition for entering a photovoltaic power curtailment and energy storage mode is detected, when the condition is met, the heat pump unit is started by using grid power for a preset time period, and the heat pump unit continues to operate by using the photovoltaic power. Therefore, it is able to realize the conversion of excess electrical energy generated by the photovoltaic power supply, i.e., converting the excess electrical energy into cold energy and thermal energy, so as to address the balance control issue when the heat pump unit consumes generated power.

In addition, the output power of the photovoltaic power supply is obtained, the output power is compared with the operating parameter of the heat pump unit to obtain the comparison result, the operating parameter of the heat pump unit is determined based on the comparison result, and the operating frequency of the heat pump unit is adjusted based on the operating parameter. Next, the real-time energy storage temperature of the heat pump unit is detected, and when the real-time energy storage temperature meets the preset target temperature for energy supply, the heat pump unit is controlled to provide working energy to one or more connected end devices. By coordinating the operation of the photovoltaic system with variable frequency devices and obtaining the power generated by the photovoltaic system in real time, the maximum utilization of the photovoltaic power is promoted.

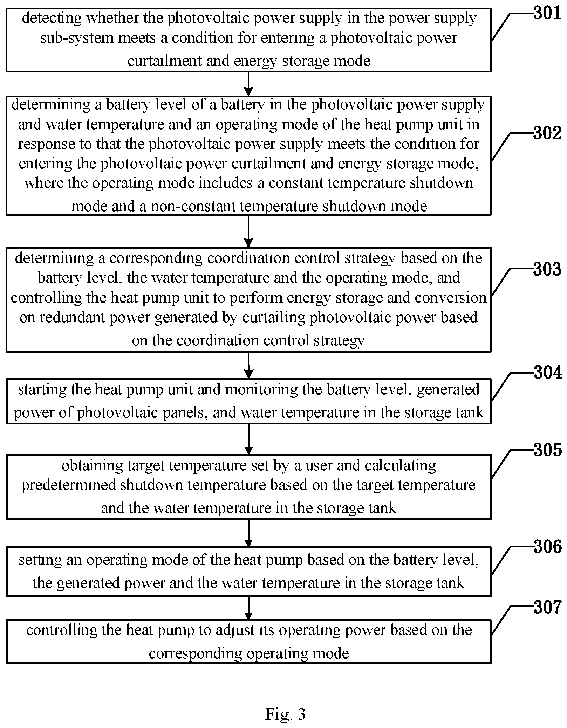

Please refer to Fig. 3, which shows a third embodiment of the photovoltaic coordination control method according to the embodiments of the present application, the method including following steps.

Step 301, detecting whether the photovoltaic power supply in the power supply sub-system meets a condition for entering a photovoltaic power curtailment and energy storage mode.

Step 302, determining a battery level of a battery in the photovoltaic power supply and water temperature and an operating mode of the heat pump unit in response to that the photovoltaic power supply meets the condition for entering the photovoltaic power curtailment and energy storage mode, where the operating mode includes a constant temperature shutdown mode and a non-constant temperature shutdown mode.

Step 303, determining a corresponding coordination control strategy based on the battery level, the water temperature and the operating mode, and controlling the heat pump unit to perform energy storage and conversion on redundant power generated by curtailing photovoltaic power based on the coordination control strategy.

The implementation principles for steps 301-303 are the same as those for steps 101-103 described above, which are not further reiterated herein.

Step 304, starting the heat pump unit and monitoring the battery level, generated power of photovoltaic panels, and water temperature in the storage tank.

In the embodiments of the present application, when the heat pump unit is started, the heat pump unit first enters the sleep mode. In the sleep mode, all loads are turned off, that is, the heat pump stops working, which is equivalent to be in a constant temperature shutdown state.

Specifically, the constant temperature shutdown state means, when the heat pump unit operates in different operating modes, the water temperature in the storage tank is heated to shutdown temperature, and the heat pump unit is stopped running and automatically enters or returns to the sleep mode. In addition, when the water temperature in the storage tank drops to the target temperature minus the temperature hysteresis, the heat pump unit operates again in the operating mode prior to the sleep mode.

Step 305, obtaining target temperature set by a user and calculating predetermined shutdown temperature based on the target temperature and the water temperature in the storage tank.

In the embodiments of the present application, the target temperature set by the user includes multiple ranges of cold water and hot water. Once set by the user, the target temperature is automatically stored and updated. When the heat pump unit is started in a new period, and the target temperature is not adjusted by the user, the target temperature set by the user in a previous period is used.

Step 306, setting an operating mode of the heat pump based on the battery level, the generated power and the water temperature in the storage tank.

In the embodiments of the present application, it requires to obtain the control instructions for different operating modes selected by the user, and the heat pump unit operates based on the operating mode selected by the user and the water temperature in the storage tank. The water temperature in the storage tank is adjusted through applying the operating mode to the heat pump unit.

In specific, the adjustment manner includes thermal storage and cold storage.

Furthermore, after starting the heat pump unit and controlling the heat pump unit to enter the sleep mode, the method further includes obtaining ambient temperature and determining the operating mode of the heat pump unit based on the ambient temperature and the target temperature.

In specific, when the user does not set or update the target temperature, the target temperature from the previous period is applied.

In practical applications, when the ambient temperature is lower than the target temperature, the adjustment manner is thermal storage; when the ambient temperature is higher than the target temperature, the adjustment manner is cold storage.

Step 307, controlling the heat pump to adjust its operating power based on the corresponding operating mode.

In the embodiments of the present application, it requires to obtain the control instructions for different operating modes selected by the user, and the heat pump operates based on the operating mode selected by the user and the target temperature. The operating power is adjusted through applying the corresponding operating mode to the heat pump.

In specific, based on different operating modes, a changing condition for the operating frequency of the heat pump during heating and cooling processes is set, allowing the heat pump to flexibly adjust different operating frequencies according to different operating modes, thereby achieving energy-saving effects.

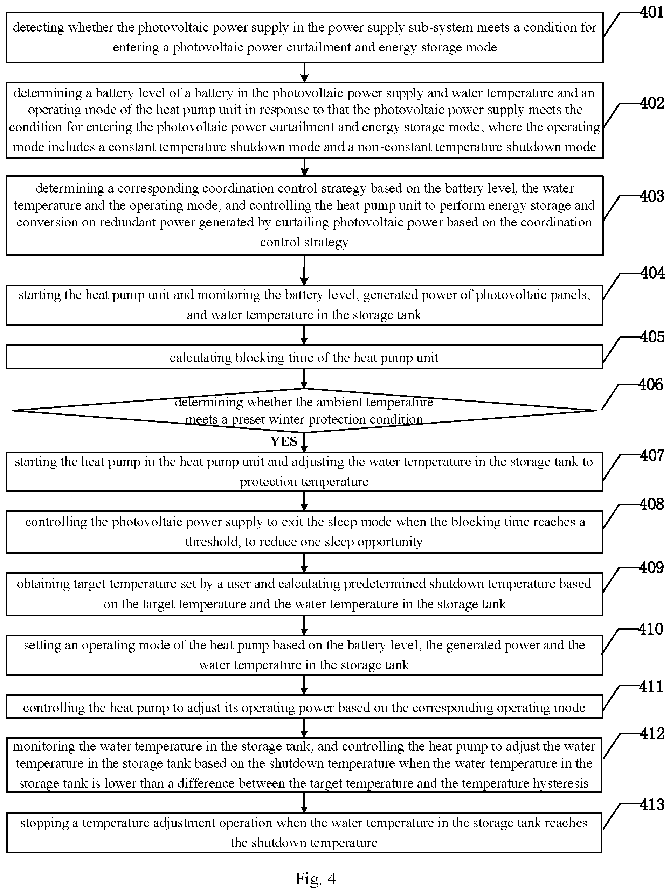

Please refer to Fig. 4, which shows a fourth embodiment of the photovoltaic coordination control method according to the embodiments of the present application, including following steps.

Step 401, detecting whether the photovoltaic power supply in the power supply sub-system meets a condition for entering a photovoltaic power curtailment and energy storage mode.

Step 402, determining a battery level of a battery in the photovoltaic power supply and water temperature and an operating mode of the heat pump unit in response to that the photovoltaic power supply meets the condition for entering the photovoltaic power curtailment and energy storage mode, where the operating mode includes a constant temperature shutdown mode and a non-constant temperature shutdown mode.

Step 403, determining a corresponding coordination control strategy based on the battery level, the water temperature and the operating mode, and controlling the heat pump unit to perform energy storage and conversion on redundant power generated by curtailing photovoltaic power based on the coordination control strategy.

The implementation principles for steps 401-403 are the same as those for steps 101-103 described above, which are not further reiterated herein.

Step 404, starting the heat pump unit and monitoring the battery level, generated power of photovoltaic panels, and water temperature in the storage tank.

Step 405, calculating blocking time of the heat pump unit.

In specific, after starting the heat pump unit, it requires to calculate the blocking time of the heat pump unit based on the startup time.

Specifically, the power sources for the heat pump include the photovoltaic power and grid power. By increasing the blocking time, during which the State of Charge (SOC) of the photovoltaic power is stored and increased. Once a set blocking time period is reached or the blocking time period reaches a threshold, the heat pump is preferably started by using the photovoltaic power.

Step 406, determining whether the ambient temperature meets a preset winter protection condition.

In the embodiments of the present application, it is determined whether the ambient temperature meets a preset winter protection condition, in a case where preset winter protection condition is met, in order to prevent the heat pump unit from being damaged due to excessively low ambient temperatures, the blocking time is not calculated. Instead, the heat pump in the heat pump unit is directly started to adjust the water temperature in the storage tank to the protection temperature.

Step 407, starting the heat pump in the heat pump unit and adjusting the water temperature in the storage tank to protection temperature, in response to that the ambient temperature meets the preset winter protection condition.

Step 408, controlling the photovoltaic power supply to exit the sleep mode when the blocking time reaches a threshold, to reduce one sleep opportunity.

In the embodiments of the present application, each time the heat pump unit is started, one sleep opportunity is allowed. When the heat pump unit enters the sleep mode, one allowed sleep opportunity is used. When the blocking time reaches the threshold, the heat pump unit exits the sleep mode and one sleep opportunity is reduced.

Further, when the water temperature in the storage tank reaches the shutdown temperature, one sleep opportunity may be allowed for the heat pump unit, and steps 405 to 408 are performed repeatedly, until the sleep opportunities are reduced to 0.

Step 409, obtaining target temperature set by a user and calculating predetermined shutdown temperature based on the target temperature and the water temperature in the storage tank.

In the embodiments of the present application, when the target temperature of the heat pump unit is updated, the heat pump unit immediately exits the sleep mode and, in response to a control instruction for the operating mode from the user, based on the target temperature, switches to a corresponding operating mode to run the heat pump unit and adjust the water temperature in the storage tank.

Step 410, setting an operating mode of the heat pump based on the battery level, the generated power and the water temperature in the storage tank.

Step 411, controlling the heat pump to its adjust operating power based on the corresponding operating mode.

Step 412, monitoring the water temperature in the storage tank, and controlling the heat pump to adjust the water temperature in the storage tank based on the shutdown temperature when the water temperature in the storage tank is lower than a difference between the target temperature and the temperature hysteresis.

In the embodiments of the present application, the heat pump unit is controlled to adjust the water temperature in the storage tank based on the determined shutdown temperature. When the water temperature in the storage tank reaches the shutdown temperature, the heat pump in the multi-mode heat pump unit stops running, one sleep opportunity is added, and it automatically enters the sleep mode, starting the calculation of the blocking time.

Step 413, stopping a temperature adjustment operation when the water temperature in the storage tank reaches the shutdown temperature.

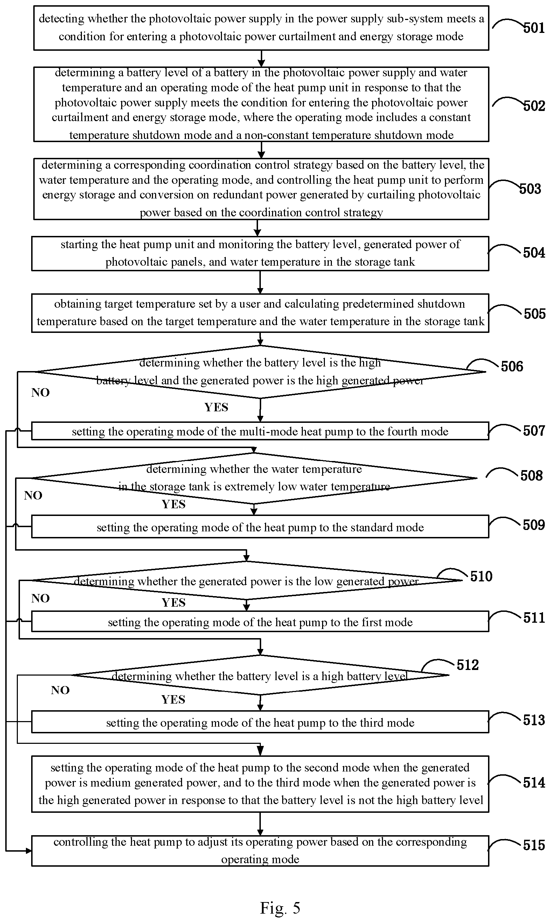

Please refer to Fig. 5, which shows a fifth embodiment of the photovoltaic coordination control method according to the embodiments of the present application, the method including following steps.

Step 501, detecting whether the photovoltaic power supply in the power supply sub-system meets a condition for entering a photovoltaic power curtailment and energy storage mode.

Step 502, determining a battery level of a battery in the photovoltaic power supply and water temperature and an operating mode of the heat pump unit in response to that the photovoltaic power supply meets the condition for entering the photovoltaic power curtailment and energy storage mode, where the operating mode includes a constant temperature shutdown mode and a non-constant temperature shutdown mode.

Step 503, determining a corresponding coordination control strategy based on the battery level, the water temperature and the operating mode, and controlling the heat pump unit to perform energy storage and conversion on redundant power generated by curtailing photovoltaic power based on the coordination control strategy.

The implementation principles for steps 401-403 are the same as those for steps 101-103 described above, which are not further reiterated herein.

Step 504, starting the heat pump unit and monitoring the battery level, generated power of photovoltaic panels, and water temperature in the storage tank.

Step 505, obtaining target temperature set by a user and calculating predetermined shutdown temperature based on the target temperature and the water temperature in the storage tank.

Step 506, determining whether the battery level is the high battery level and the generated power is the high generated power.

In this embodiment, it is determined whether the battery level is the high battery level and the generated power is the high generated power, in response to that the battery level is the high battery level and the generated power is the high generated power, the operating mode of the heat pump is set to the fourth mode. When it does not meet that the battery level is the high battery level and the generated power is the high generated power, the method proceeds with determining whether the water temperature in the water storage tank is the extremely low water temperature, the operating mode of the heat pump is set to the standard mode in response to that the water temperature in the water storage tank is the extremely low water temperature. When it does not meet that the water temperature in the water storage tank is the extremely low water temperature, the method proceeds with determining whether the generated power is the low generated power. The operating mode of the heat pump is set to the first mode in response to that the generated power is the low generated power. When it does not meet that the generated power is the low generated power, the method proceeds with determining whether the battery level is a high battery level. The operating mode of the heat pump is set to the third mode in response to that the battery level is the high battery level. When it does not meet that the battery level is the high battery level, the method proceeds with determining a level of the generated power. When the generated power is the medium generated power, the operating mode of the heat pump is set to the second mode. When the generated power is a high generated power, the operating mode of the heat pump is set to the third mode. Based on the setting of different operating modes, the heat pump is controlled to adjust the water temperature in the water storage tank, so as to meet the corresponding operational requirements and goals.

Step 507, setting the operating mode of the multi-mode heat pump to the fourth mode in response to that the battery level is the high battery level and the generated power is the high generated power.

Specifically, the fourth mode is a high photovoltaic operating mode, in a case where the multi-mode heat pump operates in the high photovoltaic operating mode, the operating power of the heat pump is not limited, and only the shutdown temperature of the heat pump is limited. The shutdown temperature of the multi-mode heat pump is adjusted by setting a compensation temperature.

In practical applications, the compensation temperature in the high photovoltaic operating mode is obtained, and the shutdown temperature is set based on the target temperature and the compensation temperature. The multi-mode heat pump is controlled to adjust the water temperature in the storage tank based on the shutdown temperature, and stop working when the water temperature in the storage tank reaches the shutdown temperature.

Specifically, when the adjustment mode of the multi-mode heat pump is thermal storage, the shutdown temperature is the target temperature plus the preset compensation temperature; when the adjustment mode of the multi-mode heat pump is cold storage, the shutdown temperature is the target temperature minus the preset compensation temperature.

Further, the preset compensation temperature should be limited to a positive value.

As can be appreciated, in the high photovoltaic operating mode, since the photovoltaic power is used, the operating power is not limited.

In practical applications, determining may also be made based on the capacity of the photovoltaic power, which is categorized into high-level photovoltaic power, medium-level photovoltaic power, and low-level photovoltaic power. Correspondingly, when starting the multi-mode heat pump, the operating mode of the multi-mode heat pump is controlled based on the detected capacity of the photovoltaic power.

Specifically, the high-level photovoltaic power corresponds to the high photovoltaic operating mode, the medium-level photovoltaic power corresponds to a medium photovoltaic operating mode, and the low-level photovoltaic power corresponds to a low photovoltaic operating mode. This shortens the user's selection time and achieves energy-saving effects by automatically using the photovoltaic power.

Step 508, determining whether the water temperature in the storage tank is extremely low water temperature.

Step 509, setting the operating mode of the heat pump to the standard mode in response to that the water temperature in the storage tank is the extremely low water temperature.

Step 510, determining whether the generated power is the low generated power in response to that the water temperature in the storage tank is not the extremely low water temperature.

Step 511, setting the operating mode of the heat pump to the first mode in response to that the generated power is the low generated power.

Specifically, the first mode is a sleep mode, details may refer to steps 202 to 205.

Step 512, determining whether the battery level is a high battery level in response to that the generated power is not the low generated power.

Step 513, setting the operating mode of the heat pump to the third mode in response to that the battery level is the high battery level.

Specifically, the third mode is the medium photovoltaic operating mode. The multi-mode heat pump is switched to the medium photovoltaic operating mode, and the shutdown temperature is set based on the target temperature. The multi-mode heat pump operates based on a second power limit. A ratio of the operating power of the heat pump to the second power limit is calculated to obtain a medium photovoltaic power ratio. A change in the medium photovoltaic power ratio is determined. When the medium photovoltaic power ratio is less than a preset first ratio, it stops controlling the operating frequency of the heat pump by using the second power limit. When the medium photovoltaic power ratio is not less than the first ratio, it stops increasing the operating power. When the medium photovoltaic power ratio is not less than a preset second ratio, a reduction in frequency is performed for the operating power and cyclic detection is performed at a preset time intervals until the medium photovoltaic power ratio is less than the second ratio and/or the water storage temperature reaches the shutdown temperature, and then the operation stops.

In the embodiments of the present application, when the user selects the medium photovoltaic operating mode, in response to the control instruction for the medium photovoltaic operating mode selected by the user, the heat pump operates in the medium photovoltaic operating mode and the shutdown temperature of the heat pump is set based on the target temperature. There is the second power limit corresponding to the medium photovoltaic operating mode, and the operating power of the heat pump is limited based on the second power limit.

In the embodiments of the present application, the operating power of the heat pump is collected, and the medium photovoltaic power ratio is calculated based on the collected operating power and the second power limit corresponding to the medium photovoltaic operating mode.

Specifically, by monitoring the operating power and calculating the medium photovoltaic power ratio in real time, where the first ratio and the second ratio are each a customizable preset value. Initially, the first ratio is preset to 0.9, and the second ratio is preset to 1.

In practical application, when the medium photovoltaic power ratio is less than 0.9, the operating power of the heat pump is not limited. When the medium photovoltaic power ratio is not less than 0.9, the operating power of the heat pump is fixed, i.e., stopping increasing the operating power. When the medium photovoltaic power ratio is not less than 1, the frequency of the operating power of the heat pump is reduced, and cyclic detection of the operating power is performed at preset time intervals until the medium photovoltaic power ratio is less than 1 or the water storage temperature reaches the shutdown temperature, and then the operation stops, i.e., the operating power becomes zero.

Step 514, setting the operating mode of the heat pump to the second mode when the generated power is medium generated power, and to the third mode when the generated power is the high generated power in response to that the battery level is not the high battery level.

In practical applications, the second mode is the low photovoltaic operating mode. The heat pump is switched to the low photovoltaic operating mode and the shutdown temperature is set based on the target temperature. The heat pump operates based on the first power limit. A ratio of the operating power of the heat pump to the first power limit is calculated to obtain a low photovoltaic power ratio. The operating frequency of the heat pump is controlled based on the low photovoltaic power ratio to adjust the water temperature in the storage tank, and the operation stops when the water temperature in the storage tank reaches the shutdown temperature.

In the embodiments of the present application, when the user selects the low photovoltaic operating mode, in response to the control instruction for the low photovoltaic operating mode selected by the user, the heat pump operates in the low photovoltaic operating mode and the shutdown temperature of the heat pump is set based on the target temperature. There is the first power limit corresponding to the low photovoltaic operating mode, and the operating power of the heat pump is limited based on the first power limit.

Step 515, controlling the heat pump to adjust its operating power based on the corresponding operating mode.

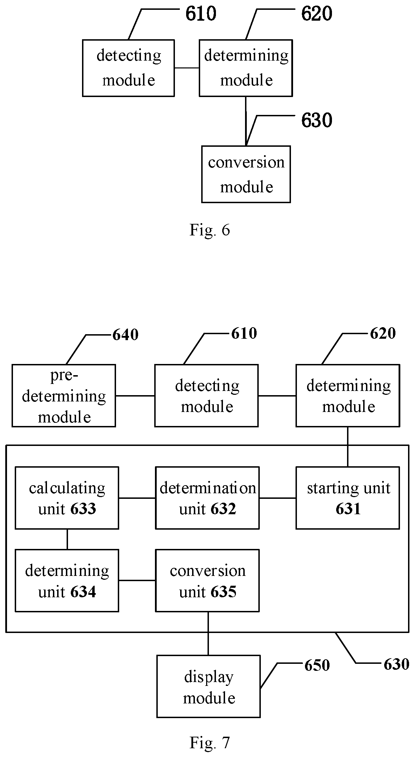

The photovoltaic coordination control method in the embodiments of the present application is described above, and the following describes the photovoltaic coordination control apparatus in the embodiments of the present application. Please refer to Fig. 6, which is a schematic diagram of a photovoltaic coordination control apparatus according to an embodiment of the present application, the apparatus is applied to a heat pump system, the heat pump system includes a power supply sub-system and a heat pump unit, the power supply sub-system includes grid power supply and photovoltaic power supply, and the apparatus includes:
a detecting module 610, configured to detect whether the photovoltaic power supply in the power supply sub-system meets a condition for entering a photovoltaic power curtailment and energy storage mode;
a determining module 620, configured to determine a battery level of a battery in the photovoltaic power supply and water temperature and an operating mode of the heat pump unit in response to that the photovoltaic power supply meets the condition for entering the photovoltaic power curtailment and energy storage mode, where the operating mode includes a constant temperature shutdown mode and a non-constant temperature shutdown mode;
a conversion module 630, configured to determine a corresponding coordination control strategy based on the battery level, the water temperature and the operating mode, and control the heat pump unit to perform energy storage and conversion on redundant power generated by curtailing photovoltaic power based on the coordination control strategy.

In the embodiments of the present application, whether the photovoltaic power supply in the power supply sub-system meets a condition for entering a photovoltaic power curtailment and energy storage mode is detected, when the condition is met, the heat pump unit is started by using the curtailed photovoltaic power, the battery level of the photovoltaic power supply is detected, and whether the water temperature in the heat pump unit reaches the target temperature is determined. Next, a corresponding coordination control strategy is determined based on the battery level, the water temperature and the operating mode, and the heat pump unit is controlled to perform energy storage and conversion on redundant power generated by curtailing photovoltaic power based on the coordination control strategy. In the present application, whether the photovoltaic power supply meets a condition for entering a photovoltaic power curtailment and energy storage mode is detected, when the condition is met, the heat pump unit is started by using grid power for a preset time period. Next, the heat pump unit continues to operate by using the photovoltaic power, while converting the curtailed photovoltaic power into battery energy. Therefore, it is able to realize the conversion of excess electrical energy generated by the photovoltaic power supply, i.e., converting the excess electrical energy into cold energy and thermal energy, so as to address the balance control issue when the heat pump unit consumes generated power.

Please refer to Fig. 7, which is a schematic diagram of the photovoltaic coordination control apparatus according to another embodiment of the present application, including:
a detecting module 610, configured to detect whether the photovoltaic power supply in the power supply sub-system meets a condition for entering a photovoltaic power curtailment and energy storage mode;
a determining module 620, configured to determine a battery level of a battery in the photovoltaic power supply and water temperature and an operating mode of the heat pump unit in response to that the photovoltaic power supply meets the condition for entering the photovoltaic power curtailment and energy storage mode, where the operating mode includes a constant temperature shutdown mode and a non-constant temperature shutdown mode;
a conversion module 630, configured to determine a corresponding coordination control strategy based on the battery level, the water temperature and the operating mode, and control the heat pump unit to perform energy storage and conversion on redundant power generated by curtailing photovoltaic power based on the coordination control strategy.

In the embodiments of the present application, the photovoltaic coordination control apparatus further includes a pre-determining module 640, configured to:
determine whether the power supply sub-system meets a pre-determining stage condition for entering the photovoltaic power curtailment and energy storage mode; where the pre-determining stage condition includes:
detecting whether the quantity of times the photovoltaic power supply in the power supply sub-system enters the photovoltaic power curtailment and energy storage mode is greater than 0, or whether a time period from the photovoltaic power supply exits the photovoltaic power curtailment and energy storage mode reaches preset first duration;
determining whether an operating time of the photovoltaic power supply system is within a preset time period in response to that the quantity of times the photovoltaic power supply enters the photovoltaic power curtailment and energy storage mode is greater than 0 or the time period from the photovoltaic power supply exits the photovoltaic power curtailment and energy storage mode reaches the preset first duration, where the preset time period is a predefined activation time range for the photovoltaic power curtailment and energy storage mode;
identifying whether duration of a photovoltaic power curtailment indication sent by the photovoltaic power supply and received by the heat pump unit exceeds preset second duration in response to that the operating time of the photovoltaic power supply system is within the preset time period;
determining whether a first accumulated power consumption of the photovoltaic power curtailment is less than a preset total accumulated power consumption in response to that the duration of the photovoltaic power curtailment indication exceeds the preset second duration.

In the embodiments of the present application, the detecting module 610 is further configured to:
detect whether there is curtailed power in the photovoltaic power supply;
calculate the total power consumed by the heat pump unit from the grid power supply, and determining whether the total power is greater than a preset total power consumption in response to detecting curtailed power in the photovoltaic power supply, wherein the preset total power consumption is a maximum power that the heat pump unit is allowed to purchase from the grid power;
determine that the photovoltaic power supply in the power supply sub-system meets the condition for entering the photovoltaic power curtailment and energy storage mode in response to that the total power is not greater than the preset total power consumption.

In the embodiments of the present application, the conversion module 630 is further configured to:
control the heat pump unit to be locked and be shut down or operate in forced frequency reduction mode when it is detected that there is no power curtailment in the photovoltaic power supply and the total power is greater than power consumed by the heat pump unit during a single startup.

In the embodiments of the present application, the conversion module 630 further includes:
a starting unit 631, configured to determine a target temperature of the heat pump unit based on the operating mode, and starting the heat pump unit by using curtailed photovoltaic power; where the target temperature in the constant temperature shutdown mode comprises multiple parameter temperatures added on the basis of a target temperature for constant temperature shutdown, and the target temperature in the non-constant temperature shutdown mode is the target temperature for the constant temperature shutdown;
a determination unit 632, configured to determine whether the water temperature reaches the target temperature;
a calculating unit 633, configured to calculate a difference value between the water temperature and the target temperature, and determining a battery's state of charge based on the battery level, in response to that the water temperature does not reach the target temperature;
a determining unit 634, configured to determine the corresponding coordination control strategy based on the difference value and the battery's state of charge according to a battery-first rule;
a conversion unit 635, configured to control, based on the coordination control strategy, the heat pump unit to convert the redundant power generated by curtailing photovoltaic power into cold energy or thermal energy.

In the embodiments of the present application, the determining unit 634 is further configured to:
match the difference value with preset water temperature ranges to determine a target water temperature range that the difference value is in, where the target water temperature range comprises a medium water temperature range, a low water temperature range and an extremely low water temperature range;
determine that the corresponding coordination control strategy is to limit a frequency of the heat pump unit and prevent the frequency of the heat pump unit from increasing in a case where the target water temperature range is the medium water temperature range or the low water temperature range and the state of charge indicates a low state of charge;
determine that the corresponding coordination control strategy is to control the frequency of the heat pump unit to steadily increase in a case where the target water temperature range is the medium water temperature range or the low water temperature range and the state of charge indicates a non-low state of charge.

In the embodiments of the present application, the determining module 620 is further configured to:
calculate grid-purchased power of the heat pump unit within a preset time period following the startup of the heat pump unit;
control the power supply sub-system to enter the photovoltaic power curtailment and energy storage mode after the heat pump unit consumes minimum allowed power after startup in a case where the grid-purchased power is less than the minimum allowed power consumed by the heat pump unit after startup;
control the power supply sub-system to exit the photovoltaic power curtailment and energy storage mode in a case where the grid-purchased power is not less than the minimum allowed power consumed by the heat pump unit after startup.

In the embodiments of the present application, the photovoltaic coordination control apparatus further includes a display module 650, configured to:
calculate the total power consumed by the heat pump unit and the total power stored after conversion;
calculate the cost of the total power consumed by the heat pump unit and the total power stored after conversion based on a utility electricity rate corresponding to a current time;
display the total power consumed by the heat pump unit, the total power stored after conversion and the corresponding cost.

In the embodiments of the present application, the photovoltaic coordination control apparatus further includes:
a starting module, configured to start the heat pump and monitoring the battery level, generated power of the photovoltaic power supply and water temperature in the storage tank;
a target temperature obtaining module, configured to obtain target temperature set by a user and calculating predetermined shutdown temperature based on the target temperature and the water temperature in the storage tank;
an operation mode setting module, configured to set an operating mode of the heat pump based on the battery level, the generated power and the water temperature in the storage tank;
a temperature adjustment module, configured to control the heat pump to adjust its operating power based on the corresponding operating mode.

In the embodiments of the present application, the photovoltaic coordination control apparatus further includes a sleep module, configured to:
calculate blocking time of the heat pump unit;
determine whether the ambient temperature meets a preset winter protection condition;
start the heat pump in the heat pump unit and adjust the water temperature in the storage tank to protection temperature, in response to that the ambient temperature meets the preset winter protection condition;
control the photovoltaic power supply to exit the sleep mode when the blocking time reaches a threshold, to reduce one sleep opportunity.

In the embodiments of the present application, the operation mode setting module includes:
a battery level and power determining sub-module, configured to determine whether the battery level is the high battery level and the generated power is the high generated power;
a first mode setting sub-module, configured to set the operating mode of the heat pump to the fourth mode in response to the battery level is the high battery level and the generated power is the high generated power;
a second mode setting sub-module, configured to determine the operating mode of the heat pump based on the battery level, the generated power and the water temperature in the storage tank among the first mode, the second mode, the third mode and the standard mode in response to that the battery level is not the high battery level and/or the generated power is not the high generated power.

In the embodiments of the present application, the second mode setting sub-module includes:
a water storage temperature determining unit, configured to determine whether the water temperature in the storage tank is extremely low water temperature;
a first mode setting unit, configured to set the operating mode of the heat pump to the standard mode in response to that the water temperature in the storage tank is the extremely low water temperature;
a second mode setting unit, configured to determine the operating mode of the heat pump among the first mode, the second mode and the third mode based on the battery level, the generated power, and the water temperature in the storage tank in response to that the water temperature in the storage tank is not the extremely low water temperature.

In the embodiments of the present application, the second mode setting unit includes:
a generated power determining sub-unit, configured to determine whether the generated power is the low generated power;
a first mode setting sub-unit, configured to set the operating mode of the heat pump to the first mode in response to that the generated power is the low generated power;
a second mode setting sub-unit, configured to determine the operating mode of the heat pump between the second mode and the third mode based on the battery level, the generated power and the water temperature in the storage tank in response to that the generated power is not the low generated power.

In the embodiments of the present application, the second mode setting sub-unit is further configured to:
determine whether the battery level is a high battery level;
set the operating mode of the heat pump to the third mode in response to that the battery level is the high battery level;
set the operating mode of the heat pump to the second mode when the generated power is the medium generated power, and to the third mode when the generated power is the high generated power in response to that the battery level is not the high battery level.

In the embodiments of the present application, the photovoltaic coordination control apparatus further includes a reheating module, configured to:
monitor the water temperature in the storage tank, and control the heat pump to adjust the water temperature in the storage tank based on the shutdown temperature when the water temperature in the storage tank is lower than a difference between the target temperature and the temperature hysteresis;
stop a temperature adjustment operation when the water temperature in the storage tank reaches the shutdown temperature.

In the embodiments of the present application, whether the photovoltaic power supply in the power supply sub-system meets a condition for entering a photovoltaic power curtailment and energy storage mode is detected, when the condition is met, the heat pump unit is started by using the curtailed photovoltaic power, the battery level of the photovoltaic power supply is detected, and whether the water temperature in the heat pump unit reaches the target temperature is determined. Next, a corresponding coordination control strategy is determined based on the battery level, the water temperature and the operating mode, and the heat pump unit is controlled to perform energy storage and conversion on redundant power generated by curtailing photovoltaic power based on the coordination control strategy. Therefore, it is able to address the issue in the prior art where, under a photovoltaic power generation curtailment scenario, it is not possible to achieve a balance between obtaining power from the electric grid and obtaining power from the photovoltaic power when using a heat pump to consume the power that cannot be fed into the electric grid.

Fig. 6 and Fig. 7 provide a detailed description of the photovoltaic coordination control device in the embodiments of the present application from the perspective of modular functional entities. Below, a detailed description of the photovoltaic coordination control apparatus in the embodiments of the present application is provided from the perspective of hardware processing.

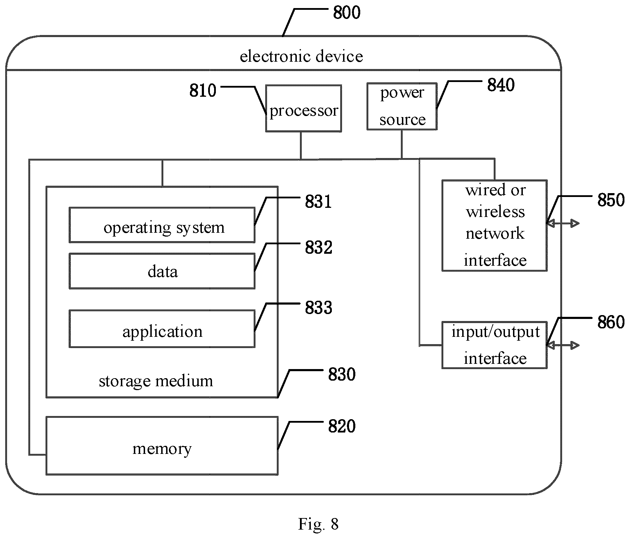

Fig. 8 is a schematic diagram of an electronic device according to the embodiments of the present application. The electronic device 800 may vary significantly in configuration or performance and may include one or more processors (central processing units, CPUs) 810 (e.g., one or more processors) and memory 820, and one or more storage media 830 (e.g., one or more mass storage devices) storing applications 833 or data 832. The memory 820 and the storage media 830 may be transient storage or persistent storage. Programs stored in the storage media 830 may include one or more modules (not shown), each module including a series of request operations for the electronic device 800. Furthermore, the processor 810 may be configured to communicate with the storage media 830 to execute a series of request operations stored in the storage media 830 on the electronic device 800 to perform the following steps:
detecting whether a photovoltaic power supply in a power supply sub-system of a heat pump system meets a condition for entering a photovoltaic power curtailment and energy storage mode;
determining a battery level of a battery in the photovoltaic power supply of the heat pump system and water temperature and an operating mode of a heat pump unit of the heat pump system in response to that the photovoltaic power supply meets the condition for entering the photovoltaic power curtailment and energy storage mode, where the operating mode includes a constant temperature shutdown mode and a non-constant temperature shutdown mode;
determining a corresponding coordination control strategy based on the battery level, the water temperature and the operating mode, and controlling the heat pump unit to perform energy storage and conversion on redundant power generated by curtailing photovoltaic power based on the coordination control strategy.

The electronic device 800 may further include one or more power sources 840, one or more wired or wireless network interfaces 850, one or more input/output interfaces 860 and/or one or more operating systems 831, such as Windows Server, Mac OS X, Unix, Linux, FreeBSD, etc. As can be appreciated by a person skilled in the art, a structure of the electronic device shown in Fig. 8 does not limit the electronic device in the embodiments of the present application, it may include more or fewer members than illustrated, a combination of some members, or a different arrangement of the members.

The present application further provides a computer-readable storage medium. The computer-readable storage medium may be a non-transitory computer-readable storage medium, or it may be a transitory computer-readable storage medium. The computer-readable storage medium stores requests which, when executed on a computer, cause the computer to perform the following steps:

detecting whether a photovoltaic power supply in a power supply sub-system of a heat pump system meets a condition for entering a photovoltaic power curtailment and energy storage mode;
determining a battery level of a battery in the photovoltaic power supply of the heat pump system and water temperature and an operating mode of a heat pump unit of the heat pump system in response to that the photovoltaic power supply meets the condition for entering the photovoltaic power curtailment and energy storage mode, where the operating mode includes a constant temperature shutdown mode and a non-constant temperature shutdown mode;
determining a corresponding coordination control strategy based on the battery level, the water temperature and the operating mode, and controlling the heat pump unit to perform energy storage and conversion on redundant power generated by curtailing photovoltaic power based on the coordination control strategy.

Those skilled in the art will clearly understand that, for the sake of convenience and conciseness, the specific working processes of the described systems or devices and units may refer to the corresponding processes in the aforementioned method embodiments, which will not be repeated herein.

When the integrated unit is implemented in the form of software functional units and sold or used as an independent product, it may be stored in a computer readable storage medium. Based on this understanding, essence of the technical solutions of the present application, or the part contributing to the prior art, or part or all of the technical solutions, may be embodied in the form of a software product. The computer software product is stored in a storage medium, and includes a number of requests to enable a computer device (which may be a personal computer, a server, or a network device, etc.) to perform all or part of the steps of method described in the various embodiments of the present application. The storage medium includes a USB flash disk, a mobile hard disk, a read-only memory (Read-Only Memory, ROM), a random access memory (Random Access Memory, RAM), a magnetic disk, an optical disk, or other medium which can store program code.

The above embodiments are only used to illustrate the technical solution of the present application, but shall not be construed as limiting the present application. Although the present application is described in detail with reference to the foregoing embodiments, as can be appreciated by a person skilled in the art, the technical solutions described in each embodiment may be modified, or some of the technical features thereof may be equivalently replaced. However, these modifications or substitutions shall not cause the essence of the corresponding technical solutions to depart from the spirit and scope of the technical solutions in each embodiment of the present application.

## Claims

1. A photovoltaic coordination control method, applied to a heat pump system, wherein the heat pump system comprises a power supply sub-system and a heat pump unit, the power supply sub-system comprises a grid power supply and a photovoltaic power supply; and the method comprises:
detecting whether the photovoltaic power supply in the power supply sub-system meets a condition for entering a photovoltaic power curtailment and energy storage mode;
determining a battery level of a battery in the photovoltaic power supply and water temperature and an operating mode of the heat pump unit in response to that the photovoltaic power supply meets the condition for entering the photovoltaic power curtailment and energy storage mode, wherein the operating mode comprises a constant temperature shutdown mode and a non-constant temperature shutdown mode;
determining a corresponding coordination control strategy based on the battery level, the water temperature and the operating mode, and controlling the heat pump unit to perform energy storage and conversion on redundant power generated by curtailing photovoltaic power based on the coordination control strategy.

2. The photovoltaic coordination control method according to claim 1, wherein prior to detecting whether the photovoltaic power supply in the power supply sub-system meets the condition for entering the photovoltaic power curtailment and energy storage mode, the method further comprises:
determining whether the power supply sub-system meets a pre-determining stage condition for entering the photovoltaic power curtailment and energy storage mode; wherein the pre-determining stage condition comprises:
detecting whether the quantity of times the photovoltaic power supply in the power supply sub-system enters the photovoltaic power curtailment and energy storage mode is greater than 0, or whether a time period from the photovoltaic power supply exits the photovoltaic power curtailment and energy storage mode reaches preset first duration;
determining whether an operating time of the photovoltaic power supply system is within a preset time period in response to the quantity of times the photovoltaic power supply enters the photovoltaic power curtailment and energy storage mode is greater than 0 or the time period from the photovoltaic power supply exits the photovoltaic power curtailment and energy storage mode reaches the preset first duration, wherein the preset time period is a predefined activation time range for the photovoltaic power curtailment and energy storage mode;
identifying whether duration of a photovoltaic power curtailment indication sent by the photovoltaic power supply and received by the heat pump unit exceeds preset second duration in response to that the operating time of the photovoltaic power supply system is within the preset time period;
determining whether a first accumulated power consumption of the photovoltaic power curtailment is less than a preset total accumulated power consumption in response to that the duration of the photovoltaic power curtailment indication exceeds the preset second duration.

3. The photovoltaic coordination control method according to claim 1, wherein detecting whether the photovoltaic power supply in the power supply sub-system meets the condition for entering the photovoltaic power curtailment and energy storage mode comprises:
detecting whether there is curtailed power in the photovoltaic power supply;
calculating the total power consumed by the heat pump unit from the grid power supply, and determining whether the total power is greater than a preset total power consumption in response to detecting curtailed power in the photovoltaic power supply, wherein the preset total power consumption is a maximum power that the heat pump unit is allowed to purchase from the grid power;
determining that the photovoltaic power supply in the power supply sub-system meets the condition for entering the photovoltaic power curtailment and energy storage mode in response to that the total power is not greater than the preset total power consumption.

4. The photovoltaic coordination control method according to claim 3, further comprising:
controlling the heat pump unit to be locked and be shut down or operate in forced frequency reduction mode when it is detected that there is no power curtailment in the photovoltaic power supply and the total power is greater than power consumed by the heat pump unit during a single startup.

5. The photovoltaic coordination control method according to claim 1, wherein determining the corresponding coordination control strategy based on the battery level, the water temperature and the operating mode, and controlling the heat pump unit to perform energy storage and conversion on the redundant power generated by curtailing photovoltaic power based on the coordination control strategy comprises:
determining a target temperature of the heat pump unit based on the operating mode, and starting the heat pump unit by using curtailed photovoltaic power; wherein the target temperature in the constant temperature shutdown mode comprises multiple parameter temperatures added on the basis of a target temperature for constant temperature shutdown, and the target temperature in the non-constant temperature shutdown mode is the target temperature for the constant temperature shutdown;
determining whether the water temperature reaches the target temperature;
calculating a difference value between the water temperature and the target temperature, and determining a battery's state of charge based on the battery level, in response to that the water temperature does not reach the target temperature;
determining the corresponding coordination control strategy based on the difference value and the battery's state of charge according to a battery-first rule;
controlling, based on the coordination control strategy, the heat pump unit to convert the redundant power generated by curtailing photovoltaic power into cold energy or thermal energy.

6. The photovoltaic coordination control method according to claim 5, wherein determining the corresponding coordination control strategy based on the difference value and the battery's state of charge according to the battery-first rule comprises:
matching the difference value with preset water temperature ranges to determine a target water temperature range that the difference value is in, wherein the target water temperature range comprises a medium water temperature range, a low water temperature range and an extremely low water temperature range;
determining that the corresponding coordination control strategy is to limit a frequency of the heat pump unit and prevent the frequency of the heat pump unit from increasing in a case where the target water temperature range is the medium water temperature range or the low water temperature range and the state of charge indicates a low state of charge;
determining that the corresponding coordination control strategy is to control the frequency of the heat pump unit to steadily increase in a case where the target water temperature range is the medium water temperature range or the low water temperature range and the state of charge indicates a non-low state of charge.

7. The photovoltaic coordination control method according to claim 5, wherein subsequent to starting the heat pump unit by using curtailed photovoltaic power, the method further comprises:
calculating grid-purchased power of the heat pump unit within a preset time period following the startup of the heat pump unit;
controlling the power supply sub-system to enter the photovoltaic power curtailment and energy storage mode after the heat pump unit consumes minimum allowed power after startup in a case where the grid-purchased power is less than the minimum allowed power consumed by the heat pump unit after startup;
controlling the power supply sub-system to exit the photovoltaic power curtailment and energy storage mode in a case where the grid-purchased power is not less than the minimum allowed power consumed by the heat pump unit after startup.

8. The photovoltaic coordination control method according to claim 7, wherein subsequent to determining the corresponding coordination control strategy based on the battery level, the water temperature and the operating mode, and controlling the heat pump unit to perform energy storage and conversion on the redundant power generated by curtailing photovoltaic power based on the coordination control strategy, the method further comprises:
calculating the total power consumed by the heat pump unit and the total power stored after conversion;
calculating the cost of the total power consumed by the heat pump unit and the total power stored after conversion based on a utility electricity rate corresponding to a current time;
displaying the total power consumed by the heat pump unit, the total power stored after conversion and the corresponding cost.

9. The photovoltaic coordination control method according to claim 1, wherein the heat pump unit comprises a storage tank and a heat pump;
wherein subsequent to controlling the heat pump unit to perform energy storage and conversion on the redundant power generated by curtailing photovoltaic power based on the coordination control strategy, the method further comprises:
starting the heat pump and monitoring the battery level, generated power of the photovoltaic power supply and water temperature in the storage tank;
obtaining target temperature set by a user and calculating predetermined shutdown temperature based on the target temperature and the water temperature in the storage tank;
setting an operating mode of the heat pump based on the battery level, the generated power and the water temperature in the storage tank;
controlling the heat pump to adjust its operating power based on the corresponding operating mode.

10. The photovoltaic coordination control method according to claim 1, wherein the operating mode comprises a first mode, a second mode, a third mode, a fourth mode and a standard mode; the battery level comprises a high battery level, and the generated power comprises high generated power;
setting the operating mode of the heat pump based on the battery level, the generated power and the water temperature in the storage tank comprises:
determining whether the battery level is the high battery level and the generated power is the high generated power;
setting the operating mode of the heat pump to the fourth mode in response to the battery level is the high battery level and the generated power is the high generated power;
determining the operating mode of the heat pump based on the battery level, the generated power and the water temperature in the storage tank among the first mode, the second mode, the third mode and the standard mode in response to that the battery level is not the high battery level and/or the generated power is not the high generated power.

11. The photovoltaic coordination control method according to claim 10, wherein determining the operating mode of the heat pump based on the battery level, the generated power and the water temperature in the storage tank among the first mode, the second mode, the third mode and the standard mode comprises:
determining whether the water temperature in the storage tank is extremely low water temperature;
setting the operating mode of the heat pump to the standard mode in response to that the water temperature in the storage tank is the extremely low water temperature;
determining the operating mode of the heat pump among the first mode, the second mode and the third mode based on the battery level, the generated power, and the water temperature in the storage tank in response to that the water temperature in the storage tank is not the extremely low water temperature.

12. The photovoltaic coordination control method according to claim 1, wherein the generated power further comprises medium generated power and low generated power;
determining the operating mode of the heat pump among the first mode, the second mode and the third mode based on the battery level, the generated power, and the water temperature in the storage tank comprises:
determining whether the generated power is the low generated power;
setting the operating mode of the heat pump to the first mode in response to that the generated power is the low generated power;
determining the operating mode of the heat pump between the second mode and the third mode based on the battery level, the generated power and the water temperature in the storage tank in response to that the generated power is not the low generated power.

13. The photovoltaic coordination control method according to claim 12, wherein determining the operating mode of the heat pump between the second mode and the third mode based on the battery level, the generated power and the water temperature in the storage tank comprises:
determining whether the battery level is a high battery level;
setting the operating mode of the heat pump to the third mode in response to that the battery level is the high battery level;
setting the operating mode of the heat pump to the second mode when the generated power is the medium generated power, and to the third mode when the generated power is the high generated power in response to that the battery level is not the high battery level.

14. A photovoltaic coordination control apparatus, applied to a heat pump system,
wherein the heat pump system comprises a power supply sub-system and a heat pump unit, the power supply sub-system comprises a grid power supply and a photovoltaic power supply; and the apparatus comprises:
a detecting module, configured to detect whether the photovoltaic power supply in the power supply sub-system meets a condition for entering a photovoltaic power curtailment and energy storage mode;
a determining module, configured to determine a battery level of a battery in the photovoltaic power supply and water temperature and an operating mode of the heat pump unit in response to that the photovoltaic power supply meets the condition for entering the photovoltaic power curtailment and energy storage mode, wherein the operating mode comprises a constant temperature shutdown mode and a non-constant temperature shutdown mode;
a conversion module, configured to determine a corresponding coordination control strategy based on the battery level, the water temperature and the operating mode, and control the heat pump unit to perform energy storage and conversion on redundant power generated by curtailing photovoltaic power based on the coordination control strategy.

15. An electronic device, comprising a memory and at least one processor, wherein the memory stores instructions; the at least one processor calls the instructions stored in the memory to cause the electronic device to perform following steps:
detecting whether a photovoltaic power supply in a power supply sub-system of a heat pump system meets a condition for entering a photovoltaic power curtailment and energy storage mode;
determining a battery level of a battery in the photovoltaic power supply of the heat pump system and water temperature and an operating mode of a heat pump unit of the heat pump system in response to that the photovoltaic power supply meets the condition for entering the photovoltaic power curtailment and energy storage mode, wherein the operating mode comprises a constant temperature shutdown mode and a non-constant temperature shutdown mode;
determining a corresponding coordination control strategy based on the battery level, the water temperature and the operating mode, and controlling the heat pump unit to perform energy storage and conversion on redundant power generated by curtailing photovoltaic power based on the coordination control strategy.

16. A computer-readable storage medium having stored thereon instructions executable by a processor for causing the processor to perform the following steps:
detecting whether a photovoltaic power supply in a power supply sub-system of a heat pump system meets a condition for entering a photovoltaic power curtailment and energy storage mode;
determining a battery level of a battery in the photovoltaic power supply of the heat pump system and water temperature and an operating mode of a heat pump unit of the heat pump system in response to that the photovoltaic power supply meets the condition for entering the photovoltaic power curtailment and energy storage mode, wherein the operating mode comprises a constant temperature shutdown mode and a non-constant temperature shutdown mode;
determining a corresponding coordination control strategy based on the battery level, the water temperature and the operating mode, and controlling the heat pump unit to perform energy storage and conversion on redundant power generated by curtailing photovoltaic power based on the coordination control strategy.
